(19) **Europäisches Patentamt European Patent Office Office européen des brevets**

(11) **EP 4 304 253 A1**

(12) **EUROPEAN PATENT APPLICATION**
published in accordance with Art. 153(4) EPC

(43) Date of publication:
**10.01.2024 Bulletin 2024/02**

(21) Application number: **22763608.1**

(22) Date of filing: **03.03.2022**

(51) International Patent Classification (IPC):
**H04W 56/00** $^{(2009.01)}$    **H04W 4/40** $^{(2018.01)}$
**H04J 11/00** $^{(2006.01)}$    **H04W 48/10** $^{(2009.01)}$
**H04W 92/18** $^{(2009.01)}$

(52) Cooperative Patent Classification (CPC):
**H04J 11/00; H04W 4/40; H04W 48/10;**
**H04W 56/00; H04W 92/18**

(86) International application number:
**PCT/KR2022/003014**

(87) International publication number:
**WO 2022/186627 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.03.2021 KR 20210028287**

(71) Applicant: **LG Electronics Inc.**
**Yeongdeungpo-gu**
**Seoul 07336 (KR)**

(72) Inventors:
• **HWANG, Daesung**
  **Seoul 07336 (KR)**
• **SEO, Hanbyul**
  **Seoul 07336 (KR)**
• **LEE, Seungmin**
  **Seoul 06772 (KR)**

(74) Representative: **Maikowski & Ninnemann Patentanwälte Partnerschaft mbB**
**Postfach 15 09 20**
**10671 Berlin (DE)**

(54) **METHOD FOR TRANSMITTING AND RECEIVING SIDELINK IN WIRELESS COMMUNICATION SYSTEM AND DEVICE THEREFOR**

(57) A method of performing, by a user equipment (LTE), a sidelink communication in a wireless communication system is disclosed. More specifically, the method comprises receiving a sidelink-synchronization signal block (S-SSB) from other UE; performing a synchronization with the other UE based on the S-SSB; and receiving (i) a physical sidelink control channel (PSCCH) and (ii) a physical sidelink shared channel (PSSCH) based on a result of the synchronization. The S-SSB includes information on a type of the other UE, and the result of the synchronization is determined based on (i) the information on the type of the other UE and (ii) a type of the UE.

【FIG. 34】

**Description**

[Technical Field]

The present disclosure relates to a wireless communication system, and more particularly, to a sidelink transmitting and receiving method of a LTE with a limited reception operation and a device therefor.

[Background Art]

A wireless communication system is a multiple access system that supports communication of multiple users by sharing available system resources (e.g. a bandwidth, transmission power, etc.) among them. Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

As a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

[Disclosure]

[Technical Problem]

The present disclosure provides a method of transmitting and receiving a sidelink in a wireless communication system and a device therefor.

The present disclosure also provides a synchronization method between LTEs for sidelink transmission/reception in a wireless communication system and a device therefor.

The present disclosure also provides a synchronization method between LTEs based on a sidelink reception capability of the UEs performing synchronization for sidelink transmission/reception in a wireless communication system and a device therefor.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical solution]

The present disclosure provides a method of performing, by a user equipment (UE), a sidelink communication in a wireless communication system.

More specifically, in one aspect of the present disclosure, there is provided a method of performing, by a UE, a sidelink communication in a wireless communication system, the method comprising receiving a sidelink-synchronization signal block (S-SSB) from other UE; performing a synchronization with the other UE based on the S-SSB; and receiving (i) a physical sidelink control channel (PSCCH) and (ii) a physical sidelink shared channel (PSSCH) based on a result of the synchronization, wherein the S-SSB includes information on a type of the other UE, and wherein the result of the synchronization is determined based on (i) the information on the type of the other UE and (ii) a type of the UE.

The type may be related to a sidelink reception capability of the UE.

The type may include (a) a first type supporting only a sidelink transmission operation, (b) a second type supporting only a physical sidelink feedback channel (PSFCH) reception operation and/or an S-SSB reception operation among (i) the sidelink transmission operation and (ii) a sidelink reception operation, and (c) a third type supporting both (i) the sidelink transmission operation and (ii) the sidelink reception operation.

Based on a type of a LTE transmitting the S-SSB being determined as the first type or the second type based on (i) the type of the UE being the first type or the second type and (ii) the information on the type of the other UE, the synchronization may not be performed.

Based on the synchronization being not performed, the PSCCH and the PSSCH may not be received.

The information on the type of the other LTE may be identified based on a transmission type of the S-SSB differently determined based on the type.

The transmission type of the S-SSB may be determined by differently applying a sequence related to the S-SSB to a transmission of the S-SSB based on the type.

The sequence related to the S-SSB may include at least one of (i) a sequence related to a sidelink-primary synchronization signal (S-PSS) and/or a sidelink-secondary synchronization signal (S-SSS), (ii) a physical sidelink broadcast channel (PSBCH) demodulation reference signal (DMRS) sequence, (iii) a scrambling sequence of the PSBCH, or (iv) a cyclic redundancy check (CRC) masking sequence of the PSBCH.

Based on the type being (i) the first type or (ii) the second type, the transmission type of the S-SSB may be a type in which an additional offset value is applied to a random seed upon generation of the sequence related to the S-SSB.

Based on the type being (i) the first type or (ii) the second type, the transmission type of the S-SSB may be a type in which an additional offset value is applied to a sequence value after generating the sequence related to the S-SSB.

The information on the type of the other UE may be identified based on a bit field value of a PSBCH differently configured based on the type.

A bit field value of the PSBCH based on the first type and a bit field value of the PSBCH based on the second type may be set to the same value, and a bit field of the PSBCH based on the third type may be set to a different value from (i) the bit field value of the PSBCH based on the first type and (ii) the bit field value of the PSBCH based on the second type.

A bit field of the PSBCH may be a RESERVED bit field.

Based on the type of the UE being the first type or the second type, the UE may identify the other UE, of which the type is the first type or the second type, as a UE with a lowest priority related to a synchronization source.

Based on the type of the LTE being the third type, the LTE may identify the other LTE, of which the type is the first type or the second type, as a LTE with a highest priority related to a synchronization source.

In another aspect of the present disclosure, there is provided a user equipment (UE) performing a sidelink communication in a wireless communication system, the LTE comprising one or more transceivers; one or more processors; and one or more memories connected to the one or more processors and configured to store instructions for operations executed by the one or more processors, wherein the operations comprise receiving a sidelink-synchronization signal block (S-SSB) from other UE; performing a synchronization with the other LTE based on the S-SSB; and receiving (i) a physical sidelink control channel (PSCCH) and (ii) a physical sidelink shared channel (PSSCH) based on a result of the synchronization, wherein the S-SSB includes information on a type of the other LTE, and wherein the result of the synchronization is determined based on (i) the information on the type of the other UE and (ii) a type of the UE.

In another aspect of the present disclosure, there is provided a method of performing, by a user equipment (UE), a sidelink communication in a wireless communication system, the method comprising transmitting a sidelink-synchronization signal block (S-SSB) to other UE; performing a synchronization with the other UE based on the S-SSB; and transmitting (i) a physical sidelink control channel (PSCCH) and (ii) a physical sidelink shared channel (PSSCH) based on a result of the synchronization, wherein the S-SSB includes information on a type of the other UE, and wherein the result of the synchronization is determined based on (i) the information on the type of the other UE and (ii) a type of the UE.

In another aspect of the present disclosure, there is provided a user equipment (UE) performing a sidelink communication in a wireless communication system, the LTE comprising one or more transceivers; one or more processors; and one or more memories connected to the one or more processors and configured to store instructions for operations executed by the one or more processors, wherein the operations comprise transmitting a sidelink-synchronization signal block (S-SSB) to other LTE; performing a synchronization with the other LTE based on the S-SSB; and receiving (i) a physical sidelink control channel (PSCCH) and (ii) a physical sidelink shared channel (PSSCH) based on a result of the synchronization, wherein the S-SSB includes information on a type of the other LTE, and wherein the result of the synchronization is determined based on (i) the information on the type of the other UE and (ii) a type of the UE.

In another aspect of the present disclosure, there is provided a device comprising one or more memories and one or more processors operatively connected to the one or more memories, wherein the one or more processors are configured to control the device to receive a sidelink-synchronization signal block (S-SSB) from other LTE, perform a synchronization with the other UE based on the S-SSB, and receive (i) a physical sidelink control channel (PSCCH) and (ii) a physical sidelink shared channel (PSSCH) based on a result of the synchronization, wherein the S-SSB includes information on a type of the other LTE, and wherein the result of the synchronization is determined based on (i) the information on the type of the other UE and (ii) a type of the UE.

In another aspect of the present disclosure, there are provided one or more non-transitory computer readable mediums storing one or more instructions, wherein the one or more instructions executable by one or more processors are configured to control a user equipment (UE) to receive a sidelink-synchronization signal block (S-SSB) from other UE, perform a synchronization with the other UE based on the S-SSB, and receive (i) a physical sidelink control channel (PSCCH) and (ii) a physical sidelink shared channel (PSSCH) based on a result of the synchronization, wherein the S-SSB includes information on a type of the other UE, and wherein the result of the synchronization is determined based on (i) the information on the type of the other UE and (ii) a type of the UE.

[Advantageous Effects]

The present disclosure has an effect of performing sidelink transmission/reception in a wireless communication system.

The present disclosure also has an effect of performing synchronization between UEs for sidelink transmission/reception in a wireless communication system.

The present disclosure also has an effect of performing synchronization between UEs based on a sidelink reception capability of the UEs performing synchronization for sidelink transmission/reception in a wireless communication system.

The present disclosure also has an effect of avoiding unnecessary synchronization between LTEs with a limited sidelink reception capability by performing synchronization between LTEs considering a sidelink reception capability of the LTEs performing synchronization for sidelink transmission/reception in a wireless communication system.

Effects which can be obtained in the present disclosure are not limited to the aforementioned advantages and other unmentioned effects will be clearly understood by those skilled in the art from the following description.

[Description of Drawings]

Accompanying drawings included as a part of the detailed description for helping understand the present disclosure provide embodiments of the present disclosure and are provided to describe technical features of the present disclosure with the detailed description.

FIG. 1 shows a structure of an LTE system, based on an embodiment of the present disclosure.
FIG. 2 shows a radio protocol architecture of a user plane, based on an embodiment of the present disclosure.
FIG. 3 shows a radio protocol architecture of a control plane, based on an embodiment of the present disclosure.
FIG. 4 shows a structure of an NR system, based on an embodiment of the present disclosure.
FIG. 5 shows a functional division between an NG-RAN and a 5GC, based on an embodiment of the present disclosure.
FIG. 6 shows a structure of a radio frame of an NR, based on an embodiment of the present disclosure.
FIG. 7 shows a structure of a slot of an NR frame, based on an embodiment of the present disclosure.
FIG. 8 shows a radio protocol architecture for a SL communication, based on an embodiment of the present disclosure.
FIG. 9 shows a radio protocol architecture for a SL communication, based on an embodiment of the present disclosure.
FIG. 10 shows a structure of an S-SSB when a CP type is NCP based on an embodiment of the present disclosure.
FIG. 11 shows a structure of an S-SSB when a CP type is ECP based on an embodiment of the present disclosure.
FIG. 12 shows a UE performing V2X or SL communication based on an embodiment of the present disclosure.
FIG. 13 shows a resource unit for V2X or SL communication based on an embodiment of the present disclosure.
FIG. 14 shows a procedure of performing V2X or SL communication by a UE based on a transmission mode, based on an embodiment of the present disclosure.
FIG. 15 shows three cast type based on an embodiment of the present disclosure.
FIG. 16 shows a UE including an LTE module and an NR module based on an embodiment of the present disclosure.
FIG. 17 shows an RRC message transmission procedure based on an embodiment of the present disclosure.
FIG. 18 shows unidirectional UE capability transfer based on an embodiment of the present disclosure.
FIG. 19 shows bidirectional UE capability transfer based on an embodiment of the present disclosure.
FIG. 20 shows a bidirectional AS layer configuration based on an embodiment of the present disclosure.
FIG. 21 shows physical layer processing of a transmitting side based on an embodiment of the present disclosure.
FIG. 22 shows physical layer processing of a receiving side based on an embodiment of the present disclosure.
FIG. 23 shows an example of an architecture of a 5G system capable of positioning a UE having access to a next generation-radio access network (NG-RAN) or an E-UTRAN based on an embodiment of the present disclosure.
FIG. 24 shows an example of implementing a network for measuring a location of a UE based on an embodiment of the present disclosure.

FIG. 25 shows an example of a protocol layer used to support LTE positioning protocol (LPP) message transmission between an LMF and a UE based on an embodiment of the present disclosure.

FIG. 26 shows an example of a protocol layer used to support NR positioning protocol A (NRPPa) PDU transmission between an LMF and an NG-RAN node based on an embodiment of the present disclosure.

FIG. 27 is a drawing for explaining an OTDOA positioning method based on an embodiment of the present disclosure.

FIG. 28 shows a synchronization source or synchronization reference of V2X based on an embodiment of the present disclosure.

FIG. 29 shows a plurality of BWPs based on an embodiment of the present disclosure.

FIG. 30 shows a BWP based on an embodiment of the present disclosure.

FIG. 31 shows a resource unit for CBR measurement based on an embodiment of the present disclosure.

FIG. 32 shows a resource unit for CBR measurement based on another embodiment of the present disclosure.

FIG. 33 shows physical layer processing for SL based on an embodiment of the present disclosure.

FIG. 34 is a flowchart illustrating an example where a sidelink communication method described in the present disclosure is performed by a receiving UE.

FIG. 35 is a flowchart illustrating an example where a sidelink communication method described in the present disclosure is performed by a transmitting UE.

FIG. 36 shows a communication system 1 applicable for the present disclosure.

FIG. 37 illustrates a communication system applied to the present disclosure.

FIG. 38 shows a signal processing circuit for a transmission signal applicable for the present disclosure.

FIG. 39 shows another example of a wireless device applicable for the present disclosure.

FIG. 40 shows hand-held device applicable for the present disclosure.

[Mode for Invention]

In various embodiments of the present disclosure, "/" and "," should be interpreted as indicating "and/or". For example, "A/B" may mean "A and/or B". Furthermore, "A, B" may mean "A and/or B". Furthermore, "A/B/C" may mean "at least one of A, B and/or C". Furthermore, "A, B, C" may mean "at least one of A, B and/or C".

In various embodiments of the present disclosure, "or" should be interpreted as indicating "and/or". For example, "A or B" may include "only A", "only B", and/or "both A and B". In other words, "or" should be interpreted as indicating "in addition or alternatively."

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5GNR. However, technical features based on an embodiment of the present disclosure will not be limited only to this.

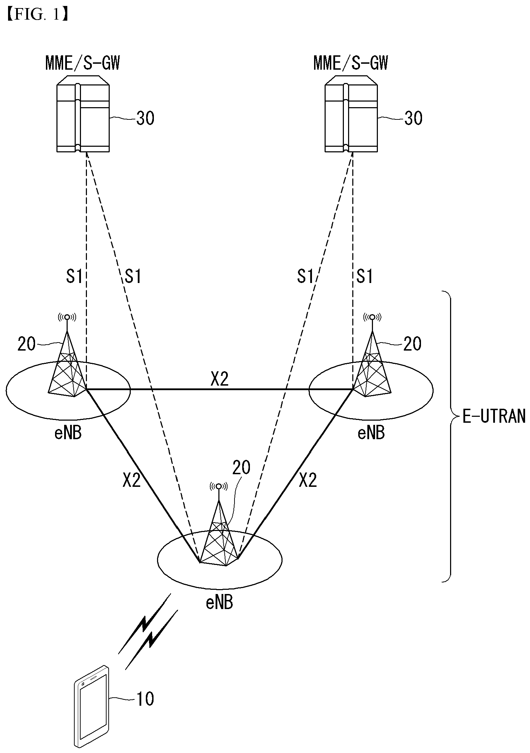

FIG. 1 shows a structure of an LTE system, based on an embodiment of the present disclosure. This may also be referred to as an Evolved-UMTS Terrestrial Radio Access Network (E-UTRAN), or a Long Term Evolution (LTE)/LTE-A system.

Referring to FIG. 1, the E-UTRAN includes a base station (BS) 20, which provides a control plane and a user plane to a user equipment (UE) 10. The UE 10 may be fixed or mobile and may also be referred to by using different terms, such as Mobile Station (MS), User Terminal (UT), Subscriber Station (SS), Mobile Terminal (MT), wireless device, and so on. The base station 20 refers to a fixed station that communicated with the UE 10 and may also be referred to by using different terms, such as evolved-NodeB (eNB), Base Transceiver System (BTS), Access Point (AP), and so on.

The base stations 20 are interconnected to one another through an X2 interface. The base stations 20 are connected to an Evolved Packet Core (EPC) 30 through an S1 interface. More specifically, the base station 20 are connected to a Mobility Management Entity (MME) through an S1-MME interface and connected to Serving Gateway (S-GW) through an S1-U interface.

The EPC 30 is configured of an MME, an S-GW, and a Packet Data Network-Gateway (P-GW). The MME has LTE access information or LTE capability information, and such information may be primarily used in UE mobility management. The S-GW corresponds to a gateway having an E-UTRAN as its endpoint. And, the P-GW corresponds to a gateway having a Packet Data Network (PDN) as its endpoint.

Layers of a radio interface protocol between the UE and the network may be classified into a first layer (L1), a second layer (L2), and a third layer (L3) based on the lower three layers of an open system interconnection (OSI) model, which is well-known in the communication system. Herein, a physical layer belonging to the first layer provides a physical channel using an Information Transfer Service, and a Radio Resource Control (RRC) layer, which is located in the third layer, executes a function of controlling radio resources between the UE and the network. For this, the RRC layer exchanges RRC messages between the UE and the base station.

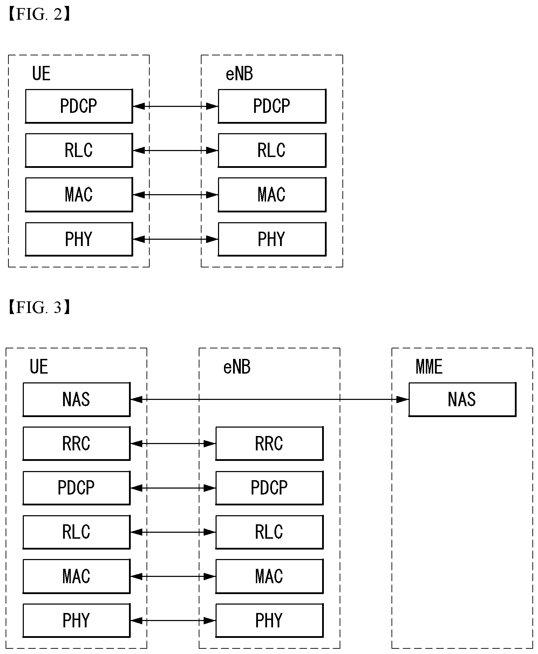

FIG. 2 shows a radio protocol architecture of a user plane, based on an embodiment of the present disclosure.

FIG. 3 shows a radio protocol architecture of a control plane, based on an embodiment of the present disclosure. The user plane corresponds to a protocol stack for user data transmission, and the control plane corresponds to a protocol stack for control signal transmission.

Referring to FIG. 2 and FIG. 3, a physical (PHY) layer belongs to the L1. A physical (PHY) layer provides an information transfer service to a higher layer through a physical channel. The PHY layer is connected to a medium access control (MAC) layer. Data is transferred (or transported) between the MAC layer and the PHY layer through a transport channel. The transport channel is sorted (or categorized) depending upon how and based on which characteristics data is being transferred through the radio interface.

Between different PHY layers, i.e., a PHY layer of a transmitter and a PHY layer of a receiver, data is transferred through the physical channel. The physical channel may be modulated by using an orthogonal frequency division multiplexing (OFDM) scheme and uses time and frequency as radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

The radio resource control (RRC) layer is defined only in a control plane. And, the RRC layer performs a function of controlling logical channel, transport channels, and physical channels in relation with configuration, re-configuration, and release of radio bearers. The RB refers to a logical path being provided by the first layer (physical layer or PHY layer) and the second layer (MAC layer, RLC layer, Packet Data Convergence Protocol (PDCP) layer) in order to transport data between the LTE and the network.

Functions of a PDCP layer in the user plane include transfer, header compression, and ciphering of user data. Functions of a PDCP layer in the control plane include transfer and ciphering/integrity protection of control plane data.

The configuration of the RB refers to a process for specifying a radio protocol layer and channel properties in order to provide a particular service and for determining respective detailed parameters and operation methods. The RB may then be classified into two types, i.e., a signaling radio bearer (SRB) and a data radio bearer (DRB). The SRB is used as a path for transmitting an RRC message in the control plane, and the DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the base station is released.

Downlink transport channels transmitting (or transporting) data from a network to a LTE include a Broadcast Channel (BCH) transmitting system information and a downlink Shared Channel (SCH) transmitting other user traffic or control messages. Traffic or control messages of downlink multicast or broadcast services may be transmitted via the downlink SCH or may be transmitted via a separate downlink Multicast Channel (MCH). Uplink transport channels transmitting (or transporting) data from a UE to a network include a Random Access Channel (RACH) transmitting initial control messages and an uplink Shared Channel (SCH) transmitting other user traffic or control messages.

Logical channels existing at a higher level than the transmission channel and being mapped to the transmission channel may include a Broadcast Control Channel (BCCH), a Paging Control Channel (PCCH), a Common Control Channel (CCCH), a Multicast Control Channel (MCCH), a Multicast Traffic Channel (MTCH), and so on.

A physical channel is configured of a plurality of OFDM symbols in the time domain and a plurality of sub-carriers in the frequency domain. One subframe is configured of a plurality of OFDM symbols in the time domain. A resource block is configured of a plurality of OFDM symbols and a plurality of sub-carriers in resource allocation units. Additionally, each subframe may use specific sub-carriers of specific OFDM symbols (e.g., first OFDM symbol) of the corresponding subframe for a Physical Downlink Control Channel (PDCCH), i.e., L1/L2 control channels. A Transmission Time Interval (TTI) refers to a unit time of a subframe transmission.

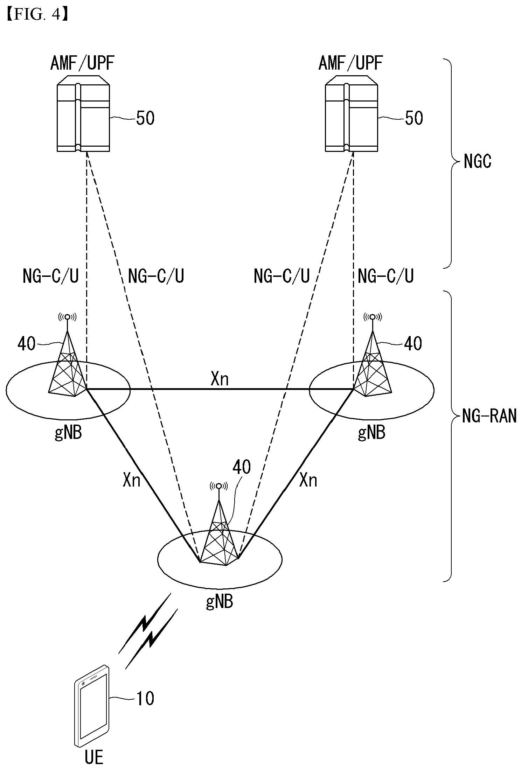

FIG. 4 shows a structure of an NR system, based on an embodiment of the present disclosure.

Referring to FIG. 4, a Next Generation - Radio Access Network (NG-RAN) may include a next generation-Node B (gNB) and/or eNB providing a user plane and control plane protocol termination to a user. FIG. 4 shows a case where the NG-RAN includes only the gNB. The gNB and the eNB are connected to one another via Xn interface. The gNB and the eNB are connected to one another via 5th Generation (5G) Core Network (5GC) and NG interface. More specifically, the gNB and the eNB are connected to an access and mobility management function (AMF) via NG-C interface, and the gNB and the eNB are connected to a user plane function (UPF) via NG-U interface.

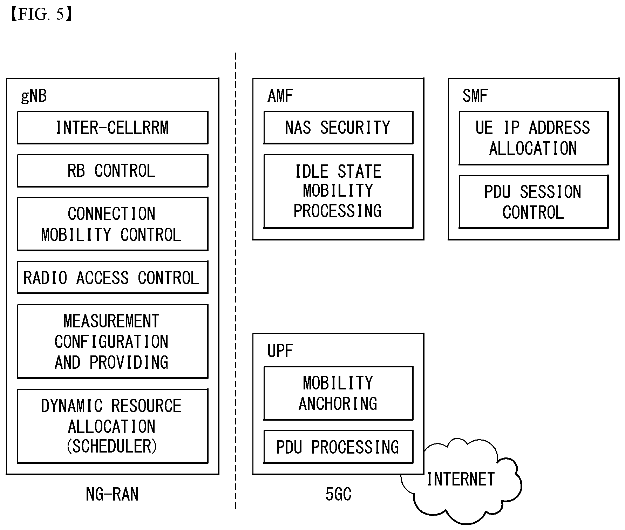

FIG. 5 shows a functional division between an NG-RAN and a 5GC, based on an embodiment of the present disclosure.

Referring to FIG. 5, the gNB may provide functions, such as Inter Cell Radio Resource Management (RRM), Radio Bearer (RB) control, Connection Mobility Control, Radio Admission Control, Measurement Configuration & Provision, Dynamic Resource Allocation, and so on. An AMF may provide functions, such as Non Access Stratum (NAS) security, idle state mobility processing, and so on. A UPF may provide functions, such as Mobility Anchoring, Protocol Data Unit (PDU) processing, and so on. A Session Management Function (SMF) may provide functions, such as user equipment (UE) Internet Protocol (IP) address allocation, PDU session control, and so on.

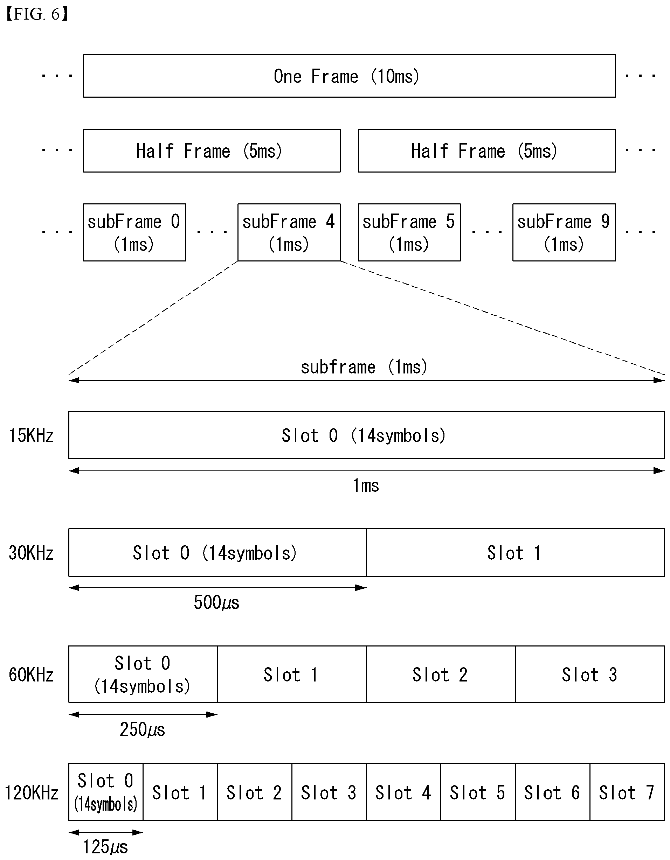

FIG. 6 shows a structure of a radio frame of an NR, based on an embodiment of the present disclosure.

Referring to FIG. 6, in the NR, a radio frame may be used for performing uplink and downlink transmission. A radio frame has a length of 10 ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols based on a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table A1 shown below represents an example of a number of symbols per slot (Nslotsymb), a number slots per frame (Nframe,uslot), and a number of slots per subframe (Nsubframe,uslot) based on an SCS configuration (u), in a case where a normal CP is used.

[Table 1]

| SCS ($15_*2^u$) | $N^{slot}_{symb}$ | $N^{framc.u}_{slot}$ | $N^{subframc.u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15_*2^u$) | $N^{slot}_{symb}$ | $N^{frame.u}_{slot}$ | $N^{subframe.u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one LTE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15 kHz, a wide area of the conventional cellular bands may be supported, and, in case an SCS is 30 kHz/60 kHz a dense-urban, lower latency, wider carrier bandwidth may be supported. In case the SCS is 60 kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table A3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
| --- | --- | --- |
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table A4, FR1 may include a band within a range of 410 MHz to 7125 MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Correspunding frequency range | Subcarrier Spacing (SCS) |
| --- | --- | --- |
| FH1 | 410MHz 7125MHz | 15, 30, 60kHz |
| FR2 | 24250MHz - 52600MHz | 60, 120, 240kHz |

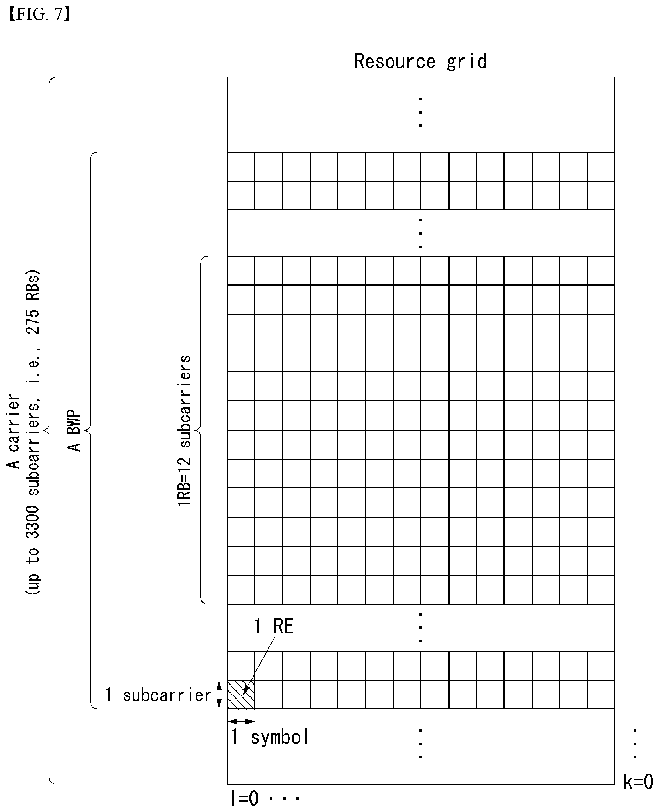

FIG. 7 shows a structure of a slot of an NR frame, based on an embodiment of the present disclosure.

Referring to FIG. 7, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A radio interface between a UE and another UE or a radio interface between the UE and a network may consist of an L1 layer, an L2 layer, and an L3 layer. In various embodiments of the present disclosure, the L1 layer may imply a physical layer. In addition, for example, the L2 layer may imply at least one of a MAC layer, an RLC layer, a PDCP layer, and an SDAP layer. In addition, for example, the L3 layer may imply an RRC layer.

Hereinafter, V2X or SL communication will be described.

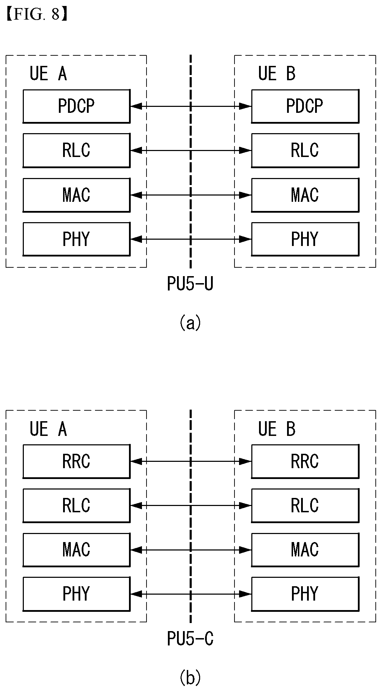

FIG. 8 shows a radio protocol architecture for a SL communication, based on an embodiment of the present disclosure. More specifically, (a) of FIG. 8 shows a user plane protocol stack of LTE, and (b) of FIG. 8 shows a control plane protocol stack of LTE.

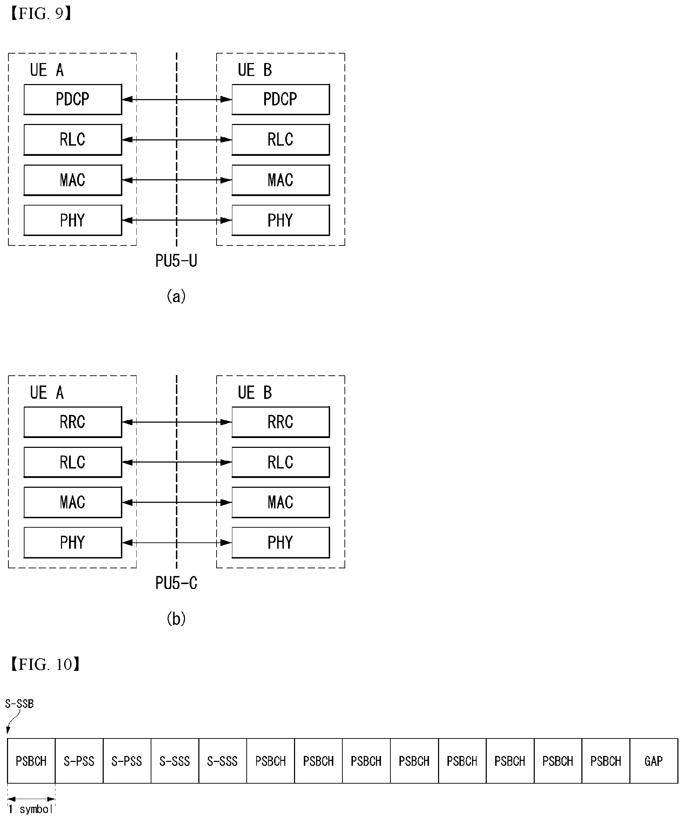

FIG. 9 shows a radio protocol architecture for a SL communication, based on an embodiment of the present disclosure. More specifically, (a) of FIG. 9 shows a user plane protocol stack of NR, and (b) of FIG. 9 shows a control plane protocol stack of NR.

Hereinafter, a sidelink synchronization signal (SLSS) and synchronization information will be described.

The SLSS may be an SL-specific sequence and include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a LTE may use the S-PSS for initial signal detection and/or for synchronization acquisition. For example, the LTE may use the S-PSS and the S-SSS for acquisition of fine synchronization and/or for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (LTL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit CRC.

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the LTE does not have to perform hypothesis detection at frequency to discover the S-SSB in the carrier.

Meanwhile, a plurality of numerologies having different SCSs and/or CP lengths may be supported in an NR SL system. In this case, a length of a time resource used by a transmitting UE to transmit the S-SSB may be decreased along with an increase in the SCS. Accordingly, coverage of the S-SSB may be decreased. Therefore, in order to ensure the coverage of the S-SSB, the transmitting UE may transmit one or more S-SSBs to a receiving LTE within one S-SSB transmission period based on the SCS. For example, the number of S-SSBs transmitted by the transmitting LTE to the receiving LTE within one S-SSB transmission period may be pre-configured or configured to the transmitting UE. For example, an S-SSB transmission period may be 160 ms. For example, the S-SSB transmission period of 160 ms may be supported for all SCSs.

For example, if the SCS is 15 kHz in FR1, the transmitting LTE may transmit 1 or 2 S-SSBs to the receiving UE within one S-SSB transmission period. For example, if the SCS is 30 kHz in FR1, the transmitting UE may transmit 1 or 2 S-SSBs to the receiving UE within one S-SSB transmission period. For example, if the SCS is 60 kHz in FR1, the transmitting UE may transmit 1, 2, or 4 S-SSBs to the receiving LTE within one S-SSB transmission period.

For example, if the SCS is 60 kHz in FR2, the transmitting UE may transmit 1, 2, 4, 8, 16, or 32 S-SSBs to the receiving UE within one S-SSB transmission period. For example, if the SCS is 120 kHz in FR2, the transmitting LTE may transmit 1, 2, 4, 8, 16, 32, or 64 S-SSBs to the receiving LTE within one S-SSB transmission period.

Meanwhile, if the SCS is 60 kHz, two types of CP may be supported. In addition, a structure of an S-SSB transmitted by the transmitting UE to the receiving UE may differ depending on a CP type. For example, the CP type may be normal CP (NCP) or extended CP (ECP). Specifically, for example, if the CP type is the NCP, the number of symbols for mapping a PSBCH within an S-SSB transmitted by the transmitting LTE may be 9 or 8. Otherwise, for example, if the CP type is the ECP, the number of symbols for mapping the PSBCH within the S-SSB transmitted by the transmitting UE may be 7 or 6. For example, the PSBCH may be mapped to a first/initial symbol within the S-SSB transmitted by the transmitting UE. For example, the receiving LTE which receives the S-SSB may perform an automatic gain control (AGC) operation in a first/initial symbol duration of the S-SSB.

FIG. 10 shows a structure of an S-SSB when a CP type is NCP based on an embodiment of the present disclosure.

For example, if the CP type is the NCP, the structure of the S-SSB, i.e., an order of symbols to which an S-PSS, an S-SSS, and a PSBCH are mapped within the S-SSB transmitted by a transmitting LTE may refer to FIG. 10.

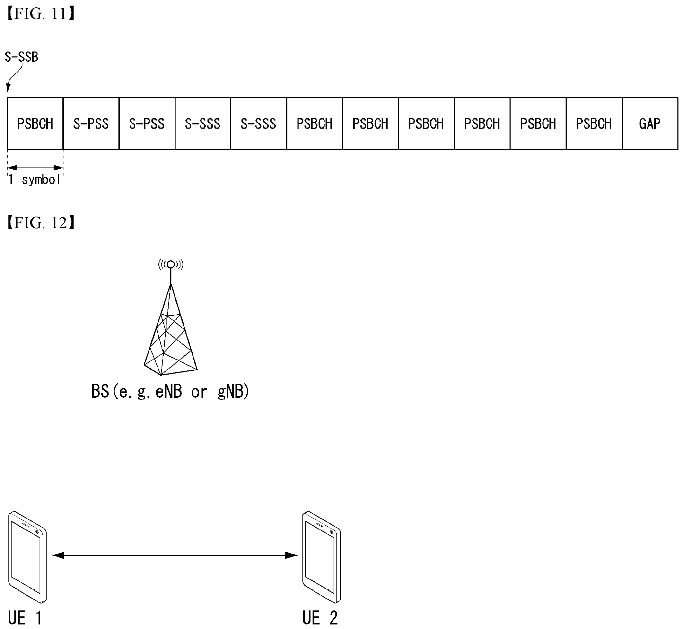

FIG. 11 shows a structure of an S-SSB when a CP type is ECP based on an embodiment of the present disclosure.

For example, if the CP type is the ECP, unlike in FIG. 10, the number of symbols for mapping a PSBCH after an S-SSS within an S-SSB may be 6. Accordingly, coverage of the S-SSB may differ depending on whether the CP type is the NCP or the ECP.

Meanwhile, each SLSS may have an SL sidelink synchronization identifier (SLSS ID).

For example, in case of LTE SL or LTE V2X, a value of the SLSS ID may be defined based on a combination of 2 different S-PSS sequences and 168 different S-SSS sequences. For example, the number of SLSS IDs may be 336. For example, the value of the SLSS ID may be any one of values 0 to 335.

For example, in case of NR SL or NR V2X, the value of the SLSS ID may be defined based on a combination of 2 different S-PSS sequences and 336 different S-SSS sequences. For example, the number of SLSS IDs may be 672. For example, the value of the SLSS ID may be any one of values 0 to 671. For example, one S-PSS out of the 2 different S-PSSs may be associated/related with in-coverage, and the other S-PSS may be associated/related with out-of-coverage. For example, the SLSS IDs 0 to 335 may be used in the in-coverage, and the SLSS IDs 336 to 671 may be used in the out-of-coverage.

Meanwhile, a transmitting LTE may need to optimize transmit power based on a characteristic of each signal constituting an S-SSB, to improve S-SSB reception performance of a receiving UE. For example, the transmitting UE may determine a maximum power reduction (MPR) value for each signal based on a peak to average power ratio (PAPR) of each signal constituting the S-SSB. For example, if the PAPR values are different between the S-PSS and S-SSS constituting the S-SSB, the transmitting UE may apply an optimal MPR value for each of the S-PSS and the S-SSS, to improve S-SSB reception performance of the receiving UE. In addition, for example, a transient period may be applied in order for the transmitting UE to perform an amplification operation for each signal. The transient period may preserve a time required when a transmitting-end amplifier of the transmitting LTE performs a normal operation at a boundary at which transmit power of the transmitting LTE varies. For example, in case of FR1, the transient period may be 10 us. For example, in case of FR2, the transient period may be 5 us. For example, a search window in which the receiving UE detects the S-PSS may be 80 ms and/or 160 ms.

FIG. 12 shows a UE performing V2X or SL communication based on an embodiment of the present disclosure.

Referring to FIG. 12, in V2X or SL communication, the term 'UE' may generally imply a UE of a user. However, if a network equipment such as a BS transmits/receives a signal based on a communication scheme between LTEs, the BS may also be regarded as a sort of the UE. For example, a UE 1 may be a first device 100, and a UE 2 may be a second device 200.

For example, the UE 1 may select a resource unit corresponding to a specific resource in a resource pool which implies a set of series of resources. In addition, the UE 1 may transmit an SL signal by using the resource unit. For example, the UE 2 which is a receiving UE may be allocated with a resource pool in which the LTE 1 is capable of transmitting a signal, and may detect a signal of the LTE 1 in the resource pool.

Herein, if the UE 1 is within a coverage of the BS, the BS may inform the UE 1 of the resource pool. Otherwise, if the LTE 1 is out of the coverage of the BS, another LTE may inform the LTE 1 of the resource pool, or the UE 1 may use a pre-configured resource pool.

In general, the resource pool may be configured based on a plurality of resource units, and each UE may select at least one resource unit for SL signal transmission.

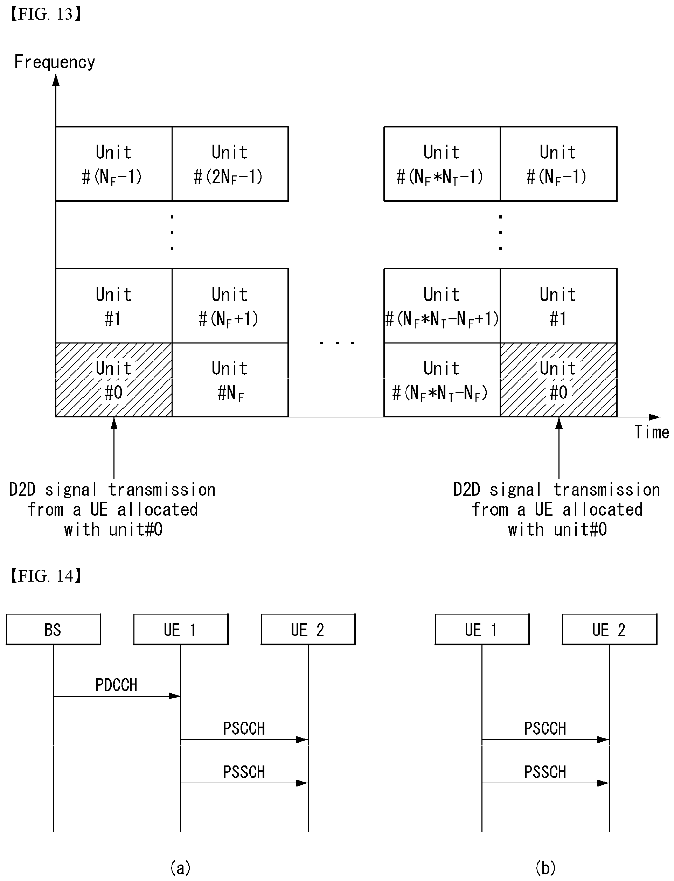

FIG. 13 shows a resource unit for V2X or SL communication based on an embodiment of the present disclosure.

Referring to FIG. 13, all frequency resources of a resource pool may be divided into NF resources, and all time resources of the resource pool may be divided into NT resources. Therefore, NF * NT resource units may be defined in the resource pool. FIG. 13 may show an example of a case where a corresponding resource pool is repeated with a period of NT subframes.

As shown in FIG. 13, one resource unit (e.g., Unit #0) may be periodically repeated. Alternatively, to obtain a diversity effect in a time or frequency domain, an index of a physical resource unit to which one logical resource unit is mapped may change to a pre-determined pattern over time. In a structure of such a resource unit, the resource pool may imply a set of resource units that can be used in transmission by a LTE intending to transmit an SL signal.

The resource pool may be subdivided into several types. For example, based on content of an SL signal transmitted in each resource pool, the resource pool may be classified as follows.

(1) Scheduling assignment (SA) may be a signal including information related to a location of a resource used for transmission of an SL data channel by a transmitting UE, a modulation and coding scheme (MCS) or multiple input multiple output (MIMO) transmission scheme required for demodulation of other data channels, timing advance (TA), or the like. The SA can be transmitted by being multiplexed together with SL data on the same resource unit. In this case, an SA resource pool may imply a resource pool in which SA is transmitted by being multiplexed with SL data. The SA may also be referred to as an SL control channel.

(2) An SL data channel (physical sidelink shared channel (PSSCH)) may be a resource pool used by the transmitting UE to transmit user data. If SA is transmitted by being multiplexed together with SL data on the same resource unit, only an SL data channel of a type except for SA information may be transmitted in the resource pool for the SL data channel. In other words, resource elements (REs) used to transmit SA information on an individual resource unit in the SA resource pool may be used to transmit SL data still in the resource pool of the SL data channel. For example, the transmitting UE may transmit the PSSCH by mapping it to consecutive PRBs.

(3) A discovery channel may be a resource pool for transmitting, by the transmitting UE, information related to an ID thereof, or the like. Accordingly, the transmitting UE may allow an adjacent UE to discover the transmitting UE itself.

Even if the aforementioned SL signals have the same content, different resource pools may be used based on a transmission/reception attribute of the SL signals. For example, even the same SL data channel or discovery message may be classified again into different resource pools based on a scheme of determining SL signal transmission timing (e.g., whether it is transmitted at a reception time of a synchronization reference signal or transmitted by applying a specific timing advance at the reception time), a resource allocation scheme (e.g., whether a BS designates a transmission resource of an individual signal to an individual transmitting LTE or whether the individual transmitting UE autonomously selects an individual signal transmission resource in a resource pool), a signal format (e.g., the number of symbols occupied by each SL signal or the number of subframes used in transmission of one SL signal), signal strength from the BS, transmit power strength of an SL UE, or the like.

Hereinafter, resource allocation in SL will be described.

FIG. 14 shows a procedure of performing V2X or SL communication by a UE based on a transmission mode, based on an embodiment of the present disclosure. In various embodiments of the present disclosure, the transmission mode may be referred to as a mode or a resource allocation mode. Hereinafter, for convenience of explanation, in LTE, the transmission mode may be referred to as an LTE transmission mode. In NR, the transmission mode may be referred to as an NR resource allocation mode.

For example, (a) of FIG. 14 shows a LTE operation related to an LTE transmission mode 1 or an LTE transmission mode 3. Alternatively, for example, (a) of FIG. 14 shows a LTE operation related to an NR resource allocation mode 1. For example, the LTE transmission mode 1 may be applied to general SL communication, and the LTE transmission mode 3 may be applied to V2X communication.

For example, (b) of FIG. 14 shows a LTE operation related to an LTE transmission mode 2 or an LTE transmission mode 4. Alternatively, for example, (b) of FIG. 14 shows a LTE operation related to an NR resource allocation mode 2.

Referring to (a) of FIG. 14, in the LTE transmission mode 1, the LTE transmission mode 3, or the NR resource allocation mode 1, a BS may schedule an SL resource to be used by the UE for SL transmission. For example, the BS may perform resource scheduling to a LTE 1 through a PDCCH (more specifically, downlink control information (DCI)), and the UE 1 may perform V2X or SL communication with respect to a UE 2 based on the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

For example, in the NR resource allocation mode 1, the LTE may be provided or allocated with one or more SL transmission resources of one transport block (TB) from the BS through a dynamic grant. For example, the BS may provide the LTE with resource for PSCCH and/or PSSCH transmission based on the dynamic grant. For example, a transmitting UE may report to the BS an SL hybrid automatic repeat request (HARQ) feedback received from a receiving UE. In this case, based on an indication within a PDCCH used by the BS to allocate a resource for SL transmission, a PUCCH resource and timing for reporting an SL HARQ feedback to the BS may be determined.

For example, DCI may include information related to a slot offset between DCI reception and first/initial SL transmission scheduled by the DCI. For example, a minimum gap between the DCI for scheduling the SL transmission resource and a first scheduled SL transmission resource may be not less than a processing time of a corresponding LTE.

For example, in the NR resource allocation mode 1, for multiple SL transmissions, the LTE may be periodically provided or allocated with a resource set from the BS through a configured grant. For example, the configured grant may include a configured grant type 1 or a configured grant type 2. For example, the LTE may determine a TB to be transmitted in each of occasions indicated by a given configured grant.

For example, the BS may allocate an SL resource to the LTE on the same carrier, or may allocate the SL resource to the UE on a different carrier.

For example, an NR BS may control LTE-based SL communication. For example, the NR BS may transmit NR DCI to the LTE to schedule an LTE SL resource. In this case, for example, a new RNTI may be defined to scramble the NR DCI. For example, the UE may include an NR SL module and an LTE SL module.

For example, after the UE including the NR SL module and the LTE SL module receives NR SL DCI from a gNB, the NR SL module may convert the NR SL DCI to an LTE DCI type 5A, and the NR SL module may transfer the LTE DCI type 5A to the LTE SL module in unit of X ms. For example, after the LTE SL module receives the LTE DCI format 5A from the NR SL module, the LTE SL module may apply activation and/or release in a first/initial LTE subframe after Z ms. For example, the X may be dynamically indicated by using a field of DCI. For example, a minimum value of the X may differ depending on LTE capability. For example, the LTE may report a single value depending on the LTE capability. For example, the X may be a positive number.

Referring to (b) of FIG. 14, in the LTE transmission mode 2, the LTE transmission mode 4, or the NR resource allocation mode 2, the LTE may determine an SL transmission resource within an SL resource configured by a BS/network or a pre-configured SL resource. For example, the configured SL resource or the pre-configured SL resource may be a resource pool. For example, the LTE may autonomously select or schedule a resource for SL transmission. For example, the UE may perform SL communication by autonomously selecting a resource within a configured resource pool. For example, the UE may autonomously select a resource within a selection window by performing a sensing and resource (re)selection procedure. For example, the sensing may be performed in unit of sub-channels. In addition, the UE 1 which has autonomously selected the resource within the resource pool may transmit the SCI to the UE 2 through a PSCCH, and thereafter may transmit data based on the SCI to the UE 2 through a PSSCH.

For example, the UE may assist the SL resource selection for another UE. For example, in the NR resource allocation mode 2, the UE may be provided/allocated with a configured grant for SL transmission. For example, in the NR resource allocation mode 2, the UE may schedule SL transmission of another UE. For example, in the NR resource allocation mode 2, the LTE may reserve an SL resource for blind retransmission.

For example, in the NR resource allocation mode 2, the LTE 1 may use the SCI to indicate a priority of SL transmission to the UE 2. For example, the UE 2 may decode the SCI, and the LTE 2 may perform sensing and/or resource (re)selection on the basis of the priority. For example, the resource (re)selection procedure may include a step in which the UE 2 identifies a candidate resource in a resource selection window and a step in which the UE 2 selects a resource for (re)transmission among the identified candidate resources. For example, the resource selection window may be a time interval for selecting a resource for SL transmission by the UE. For example, after the UE 2 triggers resource (re)selection, the resource selection window may start at $T1 \geq 0$, and the resource selection window may be restricted by a remaining packet delay budget of the UE 2. For example, in the step in which the UE 2 identifies the candidate resource in the resource selection window, if a specific resource is indicated by the SCI received by the UE 2 from the UE 1 and if an L1 SL RSRP threshold for the specific resource exceeds an SL RSRP threshold, the UE 2 may not determine the specific resource as the candidate resource. For example, the SL RSRP threshold may be determined based on a priority of SL transmission indicated by the SCI received by the UE 2 from the UE 1 and a priority of SL transmission on a resource selected by the UE 2.

For example, the L1 SL RSRP may be measured based on an SL demodulation reference signal (DMRS). For example, one or more PSSCH DMRS patterns may be configured or pre-configured in a time domain for each resource pool. For example, a PDSCH DMRS configuration type 1 and/or type 2 may be identical or similar to a frequency domain pattern of the PSSCH DMRS. For example, a correct DMRS pattern may be indicated by the SCI. For example, in the NR resource allocation mode 2, the transmitting UE may select a specific DMRS pattern from among configured or pre-configured DMRS patterns for the resource pool.

For example, in the NR resource allocation mode 2, the transmitting LTE may perform initial transmission of a transport block (TB) without reservation, based on the sensing and resource (re)selection procedure. For example, the transmitting LTE may use an SCI related to a first/initial RB to reserve an SL resource for initial transmission of a second TB, based on the sensing and resource (re)selection procedure.

For example, in the NR resource allocation mode 2, the LTE may reserve a resource for feedback-based PSSCH retransmission, through signaling related to previous transmission of the same TB. For example, the maximum number of SL resources reserved by one transmission including current transmission may be 2, 3, or 4. For example, the maximum number of SL resources may be identical irrespective of whether HARQ feedback is enabled. For example, the maximum number of HARQ (re)transmissions for one TB may be restricted by a configuration or a pre-configuration. For example, the maximum number of HARQ (re)transmissions may be up to 32. For example, in the absence of the configuration or the pre-configuration, the maximum number of HARQ (re)transmissions may not be designated. For example, the configuration or the pre-configuration may be for the transmitting LTE. For example, in the NR resource allocation mode 2, HARQ feedback for releasing a resource not used by the UE may be supported.

For example, in the NR resource allocation mode 2, the UE may use the SCI to indicate to another UE one or more sub-channels and/or slots used by the UE. For example, the UE may use the SCI to indicate to another UE one or more sub-channels and/or slots reserved by the UE for PSSCH (re)transmission. For example, a minimum allocation unit of an SL resource may be a slot. For example, a size of a sub-channel may be configured for the LTE or may be pre-configured.

Hereinafter, a sidelink control information (SCI) will be described.

Control information transmitted by a BS to a LTE through a PDCCH may be referred to as downlink control information (DCI), whereas control information transmitted by the LTE to another LTE through a PSCCH may be referred to as SCI. For example, the LTE may know in advance a start symbol of the PSCCH and/or the number of symbols of the PSCCH, before decoding the PSCCH. For example, the SCI may include SL scheduling information. For example, the LTE may transmit at least one SCI to another UE to schedule the PSSCH. For example, one or more SCI formats may be defined.

For example, a transmitting UE may transmit the SCI to a receiving UE on the PSCCH. The receiving UE may decode one SCI to receive the PSSCH from the transmitting UE.

For example, the transmitting UE may transmit two consecutive SCIs (e.g., 2-stage SCI) to the receiving UE on the PSCCH and/or the PSSCH. The receiving UE may decode the two consecutive SCIs (e.g., 2-stage SCI) to receive the PSSCH from the transmitting LTE. For example, if SCI configuration fields are divided into two groups in consideration of a (relatively) high SCI payload size, an SCI including a first SCI configuration field group may be referred to as a first SCI or a 1st SCI, and an SCI including a second SCI configuration field group may be referred to as a second SCI or a 2nd SCI. For example, the transmitting UE may transmit the first SCI to the receiving UE through the PSCCH. For example, the transmitting LTE may transmit the second SCI to the receiving UE on the PSCCH and/or the PSSCH. For example, the second SCI may be transmitted to the receiving UE through an (independent) PSCCH, or may be transmitted in a piggyback manner together with data through the PSSCH. For example, two consecutive SCIs may also be applied to different transmissions (e.g., unicast, broadcast, or groupcast).

For example, the transmitting LTE may transmit the entirety or part of information described below to the receiving UE through the SCI. Herein, for example, the transmitting UE may transmit the entirety or part of the information described below to the receiving UE through the first SCI and/or the second SCI.

- PSSCH and/or PSCCH related resource allocation information, e.g., the number/positions of time/frequency resources, resource reservation information (e.g., period), and/or
- SL CSI report request indicator or SL (L1) RSRP (and/or SL (L1) RSRQ and/or SL (L1) RSSI) report request indicator, and/or
- SL CSI transmission indicator (or SL (L1) RSRP (and/or SL (L1) RSRQ and/or SL (L1) RSSI) information transmission indicator)) (on PSSCH), and/or
- MCS information, and/or
- Transmit power information, and/or
- L1 destination ID information and/or L1 source ID information, and/or
- SL HARQ process ID information, and/or
- New data indicator (NDI) information, and/or
- Redundancy version (RV) information, and/or
- (Transmission traffic/packet related) QoS information, e.g., priority information, and/or
- SL CSI-RS transmission indicator or information on the number of (to-be-transmitted) SL CSI-RS antenna ports
- Location information of a transmitting LTE or location (or distance region) information of a target receiving LTE (for which SL HARQ feedback is requested), and/or
- Reference signal (e.g., DMRS, etc.) related to channel estimation and/or decoding of data to be transmitted through a PSSCH, e.g., information related to a pattern of a (time-frequency) mapping resource of DMRS, rank information, antenna port index information

For example, the first SCI may include information related to channel sensing. For example, the receiving UE may decode the second SCI by using a PSSCH DMRS. A polar code used in a PDCCH may be applied to the second SCI. For example, in a resource pool, a payload size of the first SCI may be identical for unicast, groupcast, and broadcast. After decoding the first SCI, the receiving LTE does not have to perform blind decoding of the second SCI. For example, the first SCI may include scheduling information of the second SCI.

Meanwhile, in various embodiments of the present disclosure, since the transmitting UE may transmit at least one of the SCI, the first SCI, and/or the second SCI to the receiving UE through the PSCCH, the PSCCH may be replaced/substituted with at least one of the SCI, the first SCI, and/or the second SCI. Additionally/alternatively, for example, the SCI may be replaced/substituted with at least one of the PSCCH, the first SCI, and/or the second SCI. Additionally/alternatively, for example, since the transmitting LTE may transmit the second SCI to the receiving UE through the PSSCH, the PSSCH may be replaced/substituted with the second SCI.

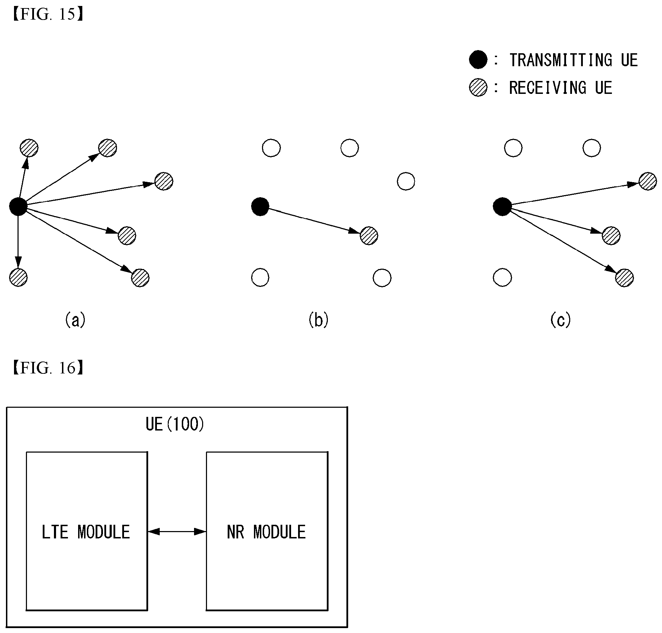

Meanwhile, FIG. 15 shows three cast type based on an embodiment of the present disclosure.

Specifically, (a) of FIG. 15 shows broadcast-type SL communication, (b) of FIG. 15 shows unicast type-SL communication, and (c) of FIG. 15 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the LTE belongs. In various embodiments of the present disclosure, SL groupcast communication may be replaced with SL multicast communication, SL one-to-many communication, or the like.

Hereinafter, in-device coexistent of LTE SL and NR SL will be described.

FIG. 16 shows a UE including an LTE module and an NR module based on an embodiment of the present disclosure.

Referring to FIG. 16, a UE may include a module related to LTE SL transmission and a module related to NR SL transmission. A packet related to LTE SL transmission generated in a higher layer may be transferred to an LTE module. A packet related to NR SL transmission generated in the higher layer may be transferred to an NR module. Herein, for example, the LTE module and the NR module may be related to a common higher layer (e.g., an application layer). Alternatively, for example, the LTE module and the NR module may be related to different higher layers (e.g., a higher layer related to the LTE module and a higher layer related to the NR module). Each packer may be related to a specific priority. In this case, the LTE module may not know a priority of a packet related to NR SL transmission, and the NR module may not know a priority of a packet related to LTE SL transmission. To compare priorities, a priority related to LTE SL transmission and a priority of a packet related to SN SL transmission may be exchanged between the LTE module and the NR module. Accordingly, the LTE module and the NR module may know a priority of a packet related to LTE SL transmission and a packet related to NR SL transmission. In addition, if the LTE SL transmission and NR SL transmission overlap, the UE may compare a priority of a packet related to LTE SL transmission and a priority of a packet related to NR SL transmission, and may perform only SL transmission related to a high priority. For example, an NR V2X priority field and a PPPP may be directly compared with each other.

For example, Table 5 shows an example of a priority of a service related to LTE SL transmission and a priority of a service related to LTE SL transmission. Although it is described based on the PPPP for convenience of explanation, the priority is not limited to the PPPP. For example, the priority may be defined in various manners. For example, the same type of common priority may be applied to an NR related service and an LTE related service.

[Table 5]

| LTE related service | PPPP value | NR related service | PPPP value |
|---|---|---|---|
| LTE SL service A | 1 | NR SL service D | 1 |
| LTE SL service B | 2 | NR SL service E | 2 |
| LTE SL service C | 3 | NR SL service F | 3 |

For example, in the embodiment of Table A5, it is assumed that the LTE determines to transmit an LTE SL service A and an NR SL service E, and transmission for the LTE SL service A and transmission for the NR SL service E overlap. For example, the transmission for the LTE SL service A and the transmission for the NR SL service E may partially or entirely overlap on a time domain. In this case, the LTE may perform only SL transmission related to a high priority, and may omit SL transmission related to a low priority. For example, the UE may transmit only the LTE SL service A on a first carrier and/or a first channel. Otherwise, the UE may not transmit the NR SL service E on a second carrier and/or a second channel.

Hereinafter, a cooperative awareness message (CAM) and a decentralized environmental notification message (DENM) will be described.

In vehicle-to-vehicle communication, a periodic message-type CAM, an event triggered message-type DENM, or the like may be transmitted. The CAM may include dynamic state information of the vehicle such as direction and speed, static data of the vehicle such as a size, and basic vehicle information such as an exterior illumination state, route details, or the like. A size of the CAM may be 50-300 bytes. The CAM is broadcast, and a latency shall be less than 100 ms. The DENM may be a message generated in an unexpected situation such as a vehicle breakdown, accident, or the like. A size of the DENM may be less than 3000 bytes, and all vehicles within a transmission range may receive a message. In this case, the DENM may have a higher priority than the CAM.

Hereinafter, carrier reselection will be described.

In V2X or SL communication, a LTE may perform carrier reselection based on a channel busy ratio (CBR) of configured carriers and/or a ProSe per-packet priority (PPPP) of a V2X message to be transmitted. For example, the carrier reselection may be performed by a MAC layer of the UE. In various embodiments of the present disclosure, a ProSe per packet priority (PPPP) may be replaced with a ProSe per packet reliability (PPPR), and the PPPR may be replaced with the PPPP. For example, it may mean that the smaller the PPPP value, the higher the priority, and that the greater the PPPP value, the lower the priority. For example, it may mean that the smaller the PPPR value, the higher the reliability, and that the greater the PPPR value, the lower the reliability. For example, a PPPP value related to a service, packet, or message related to a high priority may be smaller than a PPPP value related to a service, packet, or message related to a low priority. For example, a PPPR value related to a service, packet, or message related to a high reliability may be smaller than a PPPR value related to a service, packet, or message related to a low reliability.

CBR may mean the portion of sub-channels in a resource pool in which a sidelink-received signal strength indicator (S-RSSI) measured by the UE is detected to be greater than a pre-configured threshold. There may be a PPPP related to each logical channel, and a configuration of the PPPP value shall reflect a latency required in both a LTE and a BS. In carrier reselection, the UE may select one or more carriers from among candidate carriers starting from a lowest CBR in an ascending order of the CBR.

Hereinafter, an RRC connection establishment between UEs will be described.

For V2X or SL communication, a transmitting UE may need to establish a (PC5) RRC connection with a receiving LTE. For example, the LTE may obtain V2X-specific SIB. For a LTE which is configured to transmit V2X or SL communication by a higher layer and which has data to be transmitted, if a frequency at which at least the LTE is configured to transmit SL communication is included in the V2X-specific SIB, the UE may establish an RRC connection with another UE without including a transmission resource pool for the frequency. For example, if an RRC connection is established between the transmitting UE and the receiving UE, the transmitting LTE may perform unicast communication with respect to the receiving LTE through the established RRC connection.

When the RRC connection is established between the UEs, the transmitting UE may transmit an RRC message to the receiving UE.

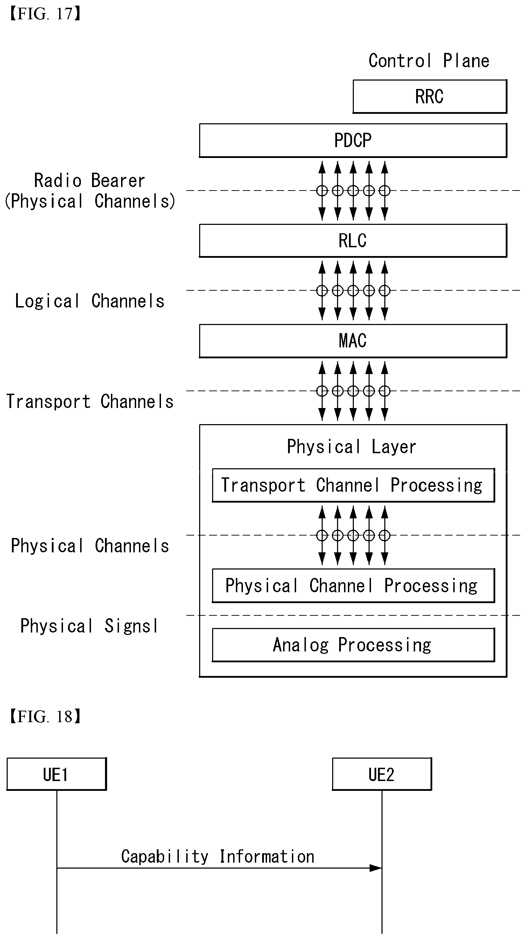

FIG. 17 shows an RRC message transmission procedure based on an embodiment of the present disclosure.

Referring to FIG. 17, an RRC message generated by a transmitting UE may be transferred to a PHY layer via a PDCP layer, an RLC layer, and a MAC layer. The RRC message may be transmitted via a signalling radio bearer (SRB). In addition, the PHY layer of the transmitting LTE may perform coding, modulation, and antenna/resource mapping for transferred information, and the transmitting UE may transmit the information to a receiving UE.

The receiving LTE may perform antenna/resource de-mapping, demodulation, and decoding for received information. The information may be transferred to the RRC layer via the MAC layer, the RLC layer, and the PDCP layer. Accordingly, the receiving UE may receive the RRC message generated by the transmitting UE.

V2X or SL communication may be supported for a LTE of an RRC_CONNECTED mode, a UE of an RRC_IDLE mode, and a UE of an (NR) RRC_INACTIVE mode. That is, the UE of the RRC_CONNECTED mode, the UE of the RRC_IDLE mode, and the UE of the (NR) RRC_INACTIVE mode may perform V2X or SL communication. The UE of the RRC_INACTIVE mode or the UE of the RRC_IDLE mode may perform V2X or SL communication by using a cell-specific configuration included in V2X-specific SIB.

RRC may be used to exchange at least LTE capability and AS layer configuration. For example, a LTE 1 may transmit LTE capability and AS layer configuration of the LTE 1 to a LTE 2, and the UE 1 may receive UE capability and AS layer configuration of the UE 2 from the UE 2. In case of UE capability transfer, an information flow may be triggered during or after PC5-S signaling for a direct link setup.

FIG. 18 shows unidirectional UE capability transfer based on an embodiment of the present disclosure.

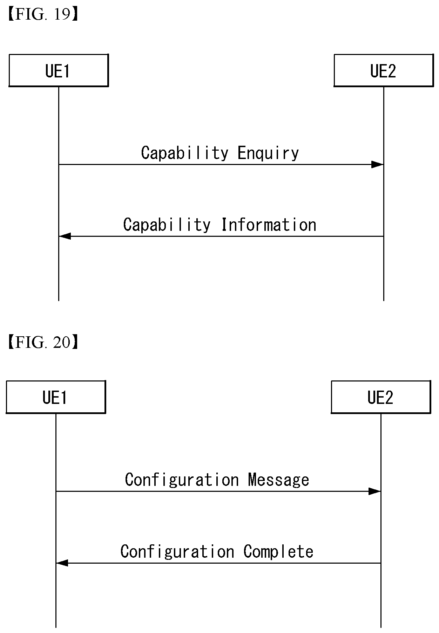

FIG. 19 shows bidirectional UE capability transfer based on an embodiment of the present disclosure.

In case of the AS layer configuration, an information flow may be triggered during or after PC5-S signaling for a direct link setup.

FIG. 20 shows a bidirectional AS layer configuration based on an embodiment of the present disclosure.

In case of the groupcast, one-to-many PC5-RRC connection establishment may not be required between group members.

Hereinafter, SL radio link monitoring (RLM) will be described.

In case of AS-level link management of unicast, SL radio link monitoring (RLM) and/or radio link failure (RLF) declaration may be supported. In case of RLC acknowledged mode (AM) in SL unicast, the RLF declaration may be triggered by an indication from RLC indicating that the maximum number of retransmissions has been reached. An AS-level link status (e.g., failure) may need to be informed to a higher layer. Unlike the RLM procedure for unicast, a groupcast-related RLM design may not be considered. The RLM and/or RLF declarations may not be necessary between group members for groupcast.

For example, a transmitting UE may transmit a reference signal to a receiving UE, and the receiving UE may perform SL RLM by using the reference signal. For example, the receiving UE may declare SL RLF by using the reference signal. For example, the reference signal may be referred to as an SL reference signal.

Hereinafter, SL measurement and reporting will be described.

For the purpose of QoS prediction, initial transmission parameter setting, link adaptation, link management, admission control, or the like, SL measurement and reporting (e.g., RSRP, RSRQ) between UEs may be considered in SL. For example, a receiving UE may receive a reference signal from a transmitting UE, and the receiving UE may measure a channel state for the transmitting UE based on the reference signal. In addition, the receiving UE may report channel state information (CSI) to the transmitting UE. SL-related measurement and reporting may include measurement and reporting of CBR and reporting of location information. Examples of channel status information (CSI) for V2X may include a channel quality indicator (CQI), a precoding matrix index (PM), a rank indicator (RI), reference signal received power (RSRP), reference signal received quality (RSRQ), pathgain/pathloss, a sounding reference symbol (SRS) resource indicator (SRI), a SRI-RS resource indicator (CRI), an interference condition, a vehicle motion, or the like. In case of unicast communication, CQI, RI, and PMI or some of them may be supported in a non-subband-based aperiodic CSI report under the assumption of four or less antenna ports. A CSI procedure may not be dependent on a standalone reference signal (RS). A CSI report may be activated or deactivated based on a configuration.

For example, the transmitting UE may transmit CSI-RS to the receiving UE, and the receiving UE may measure CQI or RI based on the CSI-RS. For example, the CSI-RS may be referred to as SL CSI-RS. For example, the CSI-RS may be confined within PSSCH transmission. For example, the transmitting UE may perform transmission to the receiving UE by including the CSI-RS on the PSSCH.

Hereinafter, physical layer processing will be described.

Based on an embodiment of the present disclosure, a data unit may be a target of physical layer processing in a transmitting side before being transmitted through a radio interface. Based on an embodiment of the present disclosure, a radio signal carrying the data unit may be a target of physical layer processing in a receiving side.

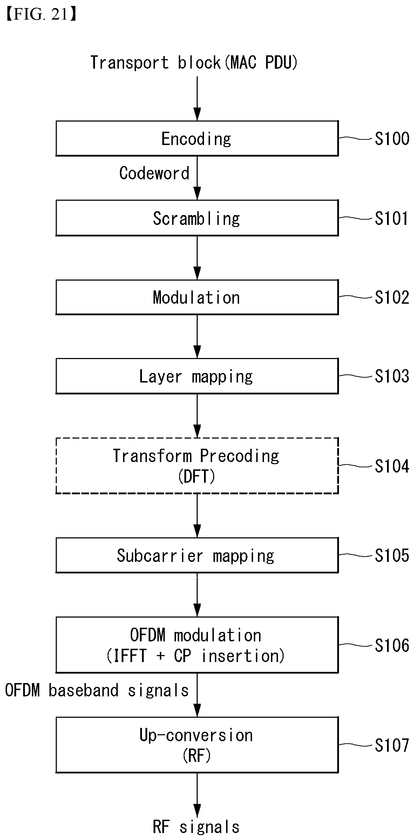

FIG. 21 shows physical layer processing of a transmitting side based on an embodiment of the present disclosure.

Table 6 may show a mapping relation between an uplink transport channel and a physical channel, and Table 7 may show a mapping relation between uplink control channel information and the physical channel.

[Table 6]

| Transport channel | Physical channel |
|---|---|
| UL-SCH (Uplink-Shared Channel) | PUSCH (Physical Uplink Shared Channel) |
| RACH (Random Access Channel) | PRACH (Physical Random Access Channel) |

[Table 7]

| Control information | Physical channel |
|---|---|
| UCI (Uplink Control Information) | PUCCH (Physical Uplink Control Channel) |
| | PUSCH (Physical Uplink Shared Channel) |

Table 8 may show a mapping relation between a downlink transport channel and a physical channel, and Table 9 may show a mapping relation between downlink control channel information and the physical channel.

[Table 8]

| Transport channel | Physical channel |
|---|---|
| DL-SCH (Downlink-Shared Channel) | PDSCH (Physical Downlink Shared Channel) |
| BCH (Broadcast Channel) | PBCH (Physical Broadcast Channel) |
| PCH (Paging Channel) | PDSCH (Physical Downlink Shared Channel) |

[Table 9]

| Control information | Physical channel |
|---|---|
| DCI (Downlink Control Information) | PDCCH (Physical Downlink Control Channel) |

Table 10 may show a mapping relation between an SL transport channel and a physical channel, and Table 11 may show a mapping relation between SL control channel information and the physical channel.

[Table 10]

| Transport channel | Physical channel |
|---|---|
| SL-SCH (Sidelink-Shared Channel) | PSSCH (Physical Sidelink Shared Channel) |
| SL-BCH (Sidelink-Broadcast Channel) | PSBCH (Physical Sidelink Broadcast Channel) |

[Table 11]

| Control information | Physical channel |
|---|---|
| SCI (Sidelink Control Information) | PSCCH (Physical Sidelink Control Channel) |

Referring to FIG. 21, in step S100, the transmitting side may perform encoding on a transport block (TB). Data and control streams from the MAC layer are encoded so that the PHY layer provides transport and control services through a radio transmission link. For example, the TB from the MAC layer may be encoded into a codeword in the transmitting side. A channel coding scheme may be a combination of error detection, error correcting, rate matching, interleaving, and a transport channel or control information splitting from the physical channel. Alternatively, the channel coding scheme may be a combination of error detection, error correcting, rate matching, interleaving, and a transport channel or control information mapping onto the physical channel.

In an NR system, a channel coding scheme described below may be used for a different type of a transport channel and a different type of control information. For example, a channel coding scheme per transport channel type may be as shown in Table 12. For example, a channel coding scheme per control information type may be as shown in Table 13.

[Table 12]

| Transport channel | Channel coding scheme |
|---|---|
| UL-SCH | LDPC(Low Density Parity Check) |
| DL-SCH | |
| SL-SCH | |
| PCH | |
| BCH | Polar code |
| SL-BCH | |

[Table 13]

| Control information | Channel coding scheme |
|---|---|
| DCI | Polar code |
| SCI | |
| UCI | Block code, Polar code |

For example, a polar code may be applied to the PSCCH. For example, an LDPC code may be applied to a TB transmitted through the PSSCH.

For transmission of TB (e.g., MAC PDU), the transmitting side may attach a cyclic redundancy check (CRC) sequence to the TB. Therefore, the transmitting side may provide error detection for a receiving side. In SL communication, the transmitting side may be a transmitting UE, and the receiving side may be a receiving UE. In an NR system, a communication device may use an LDPC code in encoding/decoding of UL-SCH and DL-SCH or the like. The NR system may support two LDPC base graphs (i.e., two LDPC base matrixes). The two LDCP base graphs may be an LDPC base graph 1 optimized for a small TB and an LDPC base graph optimized for a great TB. The transmitting side may select the LDPC base graph 1 or 2 based on a TB size and a coding rate R. The coding rate may be indicated by a modulation coding scheme (MCS) index I_MCS. The MCS index may be provided dynamically to the UE by a PDCCH which schedules a PUSCH or a PDSCH. Alternatively, the MCS index may be provided dynamically to the LTE by a PDCCH which (re)initializes or activates a UL configured grant 2 or DL SPS. The MCS index may be provided to the UE by RRC signaling related to a UL configured grant type 1. If the CRC-attached TB is greater than a maximum code block size for the selected LDPC base graph, the transmitting side may split the CRC-attached TB into a plurality of code blocks. In addition, the transmitting side may attach an additional CRC sequence to each code block. Maximum code block sizes for the LDPC base graph 1 and LDPC base graph 2 may be respectively 8448 bits and 3480 bits. If the CRC-attached TB is not greater than the maximum code block size for the selected LDPC base graph, the transmitting side may encode the CRC-attached TB based on the selected LDPC base graph. The transmitting side may encode each code block of the TB based on the selected LDPC basic graph. In addition, the LDPC coded blocks may be individually rate matched. A code block link may be performed to generate a codeword for transmission on a PDSCH or a PUSCH. For the PDSCH, up to two codewords (i.e., up to two TBs) may be simultaneously transmitted on the PDSCH. The PUSCH may be used in transmission of UL-SCH data and layer-1 and/or 2 control information. Although not shown in FIG. 21, the layer-1 and/or 2 control information may be multiplexed with a codeword for UL-SCH data.

In steps S101 and S102, the transmitting side may perform scrambling and modulation on the codeword. Bits of the codeword may be scrambled and modulated to generate a block of a complex-valued modulation symbol.

In step S103, the transmitting side may perform layer mapping. Complex-valued modulation symbols of the codeword may be mapped to one or more multiple input multiple output (MIMO) layers. The codeword may be mapped to up to four layers. The PDSCH may carry two codewords, and thus the PDSCH may support up to 8-layer transmission. The PUSCH may support a single codeword, and thus the PUSCH may support up to 4-layer transmission.

In step S104, the transmitting side may perform precoding transform. A downlink transmission waveform may be normal orthogonal frequency division multiplexing (OFDM) which uses cyclic prefix (CP). For downlink, transform precoding (i.e., discrete Fourier transform (DFT)) may not be applied.

An uplink transmission waveform may be conventional OFDM using CP having a transform precoding function performing DFT spreading which can be disabled or enabled. In an NR system, for uplink, if enabled, the transform precoding may be selectively applied. The transform precoding may be spreading of uplink data in a specific manner to decrease a peak-to-average power ratio (PAPR) of a waveform. The transform precoding may be one type of DFT. That is, the NR system may support two options for an uplink waveform. One may be CP-OFDM (identical to DL waveform), and the other may be DFT-s-OFDM. Whether the UE shall use CP-OFDM or DFT-s-OFDM may be determined by the BS through an RRC parameter.

In step S105, the transmitting side may perform subcarrier mapping. A layer may be mapped to an antenna port. In downlink, for layer-to-antenna port mapping, transparent manner (non-codebook-based) mapping may be supported, and how to perform beamforming or MIMO precoding may be transparent to the UE. In uplink, for layer-to-antenna port mapping, non-codebook-based mapping and codebook-based mapping may be both supported.

For each antenna port (i.e., layer) used in transmission of a physical channel (e.g., PDSCH, PUSCH, PSSCH), the transmitting side may map complex-valued modulation symbols to a subcarrier in a resource block allocated to a physical channel.

In step S106, the transmitting side may perform OFDM modulation. A communication device of the transmitting side may add CP and perform inverse fast Fourier transform (IFFT), thereby generating a time-continuous OFDM baseband signal on an antenna port p and a subcarrier spacing configuration u for an OFDM symbol l within TTI for the physical channel. For example, for each OFDM symbol, the communication device of the transmitting side may perform IFFT on a complex-valued modulation symbol mapped to a resource block of a corresponding OFDM symbol. In addition, the communication device of the transmitting side may add CP to a signal to which IFFT is performed to generate an OFDM baseband signal.

In step S107, the transmitting side may perform up-conversion. The communication device of the transmitting side may up-convert the subcarrier spacing configuration u, the OFDM symbol l, and the OFDM baseband signal for the antenna port p, to a carrier frequency f0 of a cell to which the physical channel is allocated.

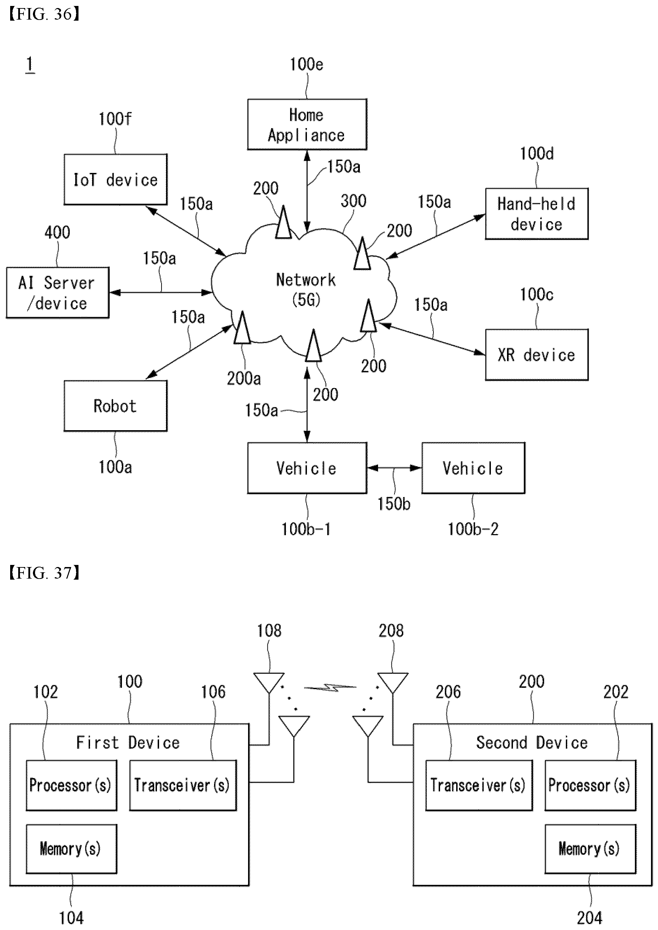

The processor 102 and/or 202 of FIG. 36 may be configured to perform encoding, scrambling, modulation, layer mapping, precoding conversion (for uplink), subcarrier mapping, and OFDM modulation.

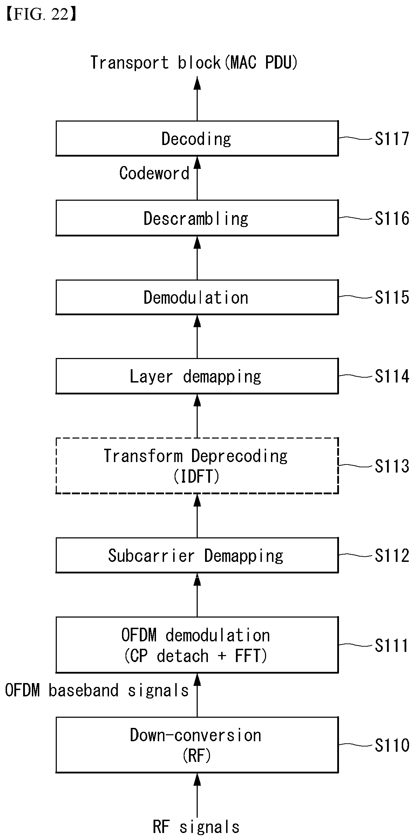

FIG. 22 shows physical layer processing of a receiving side based on an embodiment of the present disclosure.

The physical layer processing of the receiving side may be inverse processing of physical layer processing of a transmitting side.

In step S110, the receiving side may perform frequency down-conversion. A communication device of the receiving side may receive an RF signal of a carrier frequency through an antenna. Transceivers 106 and/or 206 for receiving an RF signal at a carrier frequency may down-convert a carrier frequency of the RF signal into a baseband to obtain an OFDM baseband signal.

In step S111, the receiving side may perform OFDM demodulation. The communication device of the receiving side may obtain a complex-valued modulation symbol through CP detachment and fast Fourier transform (FFT). For example, for each OFDM symbol, the communication device of the receiving side may remove CP from the OFDM baseband signal. In addition, the communication device of the receiving side may perform FFT on the CP-removed OFDM baseband signal to obtain a complex-valued modulation symbol for an antenna port p, a subcarrier spacing u, and an OFDM symbol l.

In step S112, the receiving side may perform subcarrier demapping. In order to obtain a complex-valued modulation symbol of a corresponding physical channel, the subcarrier demapping may be performed on the complex-valued modulation symbol. For example, a processor of a UE may obtain a complex-valued modulation symbol to be mapped to a subcarrier belonging to a PDSCH among complex-valued modulation symbols received in a bandwidth part (BWP).

In step S113, the receiving side may perform transform de-precoding. When transform precoding is enabled for an uplink physical channel, the transform de-precoding (e.g., inverse discrete Fourier transform (IDFT)) may be performed on a complex-valued modulation symbol of the uplink physical channel. For a downlink physical channel or a transform precoding-disabled uplink physical channel, the transform de-precoding may not be performed.

In step S114, the receiving side may perform layer demapping. The complex-valued modulation symbol may be de-mapped into one or two codewords.

In steps S 115 and S 116, the receiving side may perform demodulation and descrambling. A complex-valued modulation symbol of a codeword may be demodulated, and may be descrambled into bits of the codeword.

In step S 117, the receiving side may perform decoding. The codeword may be decoded with TB. For UL-SCH and DL-SCH, an LDPC base graph 1 or 2 may be selected based on a TB size and a coding rate R. The codeword may include one or a plurality of coded blocks. Each coded block may be decoded into a CRC-attached code block or a CRC-attached TB based on the selected LDPC base graph. If code block segmentation is performed on the CRC-attached TB in a transmitting side, a CRC sequence may be removed from each of the CRC-attached code blocks to obtain code blocks. The code block may be linked to the CRC-attached TB. A TB CRC sequence may be removed from the CRC-attached TB, thereby obtaining the TB. The TB may be transferred to the MAC layer.

The processor 102 and/or 202 of FIG. 37 may be configured to perform OFDM demodulation, subcarrier demapping, layer demapping, demodulation, descrambling, and decoding.

In the aforementioned physical layer processing of the transmitting/receiving side, time and frequency domain resources related to subcarrier mapping (e.g., an OFDM symbol, a subcarrier, a subcarrier frequency), OFDM modulation, and frequency up/down-conversion may be determined based on resource allocation (e.g., an uplink grant, downlink allocation).

Hereinafter, a hybrid automatic repeat request (HARQ) procedure will be described.

An error compensation scheme is used to secure communication reliability. Examples of the error compensation scheme may include a forward error correction (FEC) scheme and an automatic repeat request (ARQ) scheme. In the FEC scheme, errors in a receiving end are corrected by attaching an extra error correction code to information bits. The FEC scheme has an advantage in that time delay is small and no information is additionally exchanged between a transmitting end and the receiving end but also has a disadvantage in that system efficiency deteriorates in a good channel environment. The ARQ scheme has an advantage in that transmission reliability can be increased but also has a disadvantage in that a time delay occurs and system efficiency deteriorates in a poor channel environment.

A hybrid automatic repeat request (HARQ) scheme is a combination of the FEC scheme and the ARQ scheme. In the HARQ scheme, it is determined whether an unrecoverable error is included in data received by a physical layer, and retransmission is requested upon detecting the error, thereby improving performance.

In case of SL unicast and groupcast, HARQ feedback and HARQ combining in the physical layer may be supported. For example, when a receiving UE operates in a resource allocation mode 1 or 2, the receiving LTE may receive the PSSCH from a transmitting UE, and the receiving UE may transmit HARQ feedback for the PSSCH to the transmitting UE by using a sidelink feedback control information (SFCI) format through a physical sidelink feedback channel (PSFCH).

For example, the SL HARQ feedback may be enabled for unicast. In this case, in a non-code block group (non-CBG) operation, if the receiving LTE decodes a PSCCH of which a target is the receiving LTE and if the receiving LTE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting LTE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, LTEs belonging to the same group may transmit HARQ feedback by using different PSFCH resources.

For example, when the SL HARQ feedback is enabled for groupcast, the receiving UE may determine whether to transmit the HARQ feedback to the transmitting LTE based on a transmission-reception (TX-RX) distance and/or RSRP.

For example, in the groupcast option 1, in case of the TX-RX distance-based HARQ feedback, if the TX-RX distance is less than or equal to a communication range requirement, the receiving UE may transmit HARQ feedback for the PSSCH to the transmitting UE. Otherwise, if the TX-RX distance is greater than the communication range requirement, the receiving LTE may not transmit the HARQ feedback for the PSSCH to the transmitting LTE. For example, the transmitting UE may inform the receiving UE of a location of the transmitting UE through SCI related to the PSSCH. For example, the SCI related to the PSSCH may be second SCI. For example, the receiving LTE may estimate or obtain the TX-RX distance based on a location of the receiving UE and the location of the transmitting UE. For example, the receiving UE may decode the SCI related to the PSSCH and thus may know the communication range requirement used in the PSSCH.

For example, in case of the resource allocation mode 1, a time (offset) between the PSFCH and the PSSCH may be configured or pre-configured. In case of unicast and groupcast, if retransmission is necessary on SL, this may be indicated to a BS by an in-coverage UE which uses the PUCCH. The transmitting UE may transmit an indication to a serving BS of the transmitting UE in a form of scheduling request (SR)/buffer status report (BSR), not a form of HARQ ACK/NACK. In addition, even if the BS does not receive the indication, the BS may schedule an SL retransmission resource to the UE. For example, in case of the resource allocation mode 2, a time (offset) between the PSFCH and the PSSCH may be configured or pre-configured.

For example, from a perspective of UE transmission in a carrier, TDM between the PSCCH/PSSCH and the PSFCH may be allowed for a PSFCH format for SL in a slot. For example, a sequence-based PSFCH format having a single symbol may be supported. Herein, the single symbol may not an AGC duration. For example, the sequence-based PSFCH format may be applied to unicast and groupcast.

For example, in a slot related to a resource pool, a PSFCH resource may be configured periodically as N slot durations, or may be pre-configured. For example, N may be configured as one or more values greater than or equal to 1. For example, N may be 1, 2, or 4. For example, HARQ feedback for transmission in a specific resource pool may be transmitted only through a PSFCH on the specific resource pool.

For example, if the transmitting LTE transmits the PSSCH to the receiving UE across a slot #X to a slot #N, the receiving UE may transmit HARQ feedback for the PSSCH to the transmitting UE in a slot #(N+A). For example, the slot #(N+A) may include a PSFCH resource. Herein, for example, A may be a smallest integer greater than or equal to K. For example, K may be the number of logical slots. In this case, K may be the number of slots in a resource pool. Alternatively, for example, K may be the number of physical slots. In this case, K may be the number of slots inside or outside the resource pool.

For example, if the receiving UE transmits HARQ feedback on a PSFCH resource in response to one PSSCH transmitted by the transmitting UE to the receiving UE, the receiving LTE may determine a frequency domain and/or code domain of the PSFCH resource based on an implicit mechanism in a configured resource pool. For example, the receiving UE may determine the frequency domain and/or code domain of the PSFCH resource, based on at least one of a slot index related to PSCCH/PSSCH/PSFCH, a sub-channel related to PSCCH/PSSCH, and/or an identifier for identifying each receiving LTE in a group for HARQ feedback based on the groupcast option 2. Additionally/alternatively, for example, the receiving UE may determine the frequency domain and/or code domain of the PSFCH resource, based on at least one of SL RSRP, SINR, L1 source ID, and/or location information.

For example, if HARQ feedback transmission through the PSFCH of the UE and HARQ feedback reception through the PSFCH overlap, the LTE may select any one of HARQ feedback transmission through the PSFCH and HARQ feedback reception through the PSFCH based on a priority rule. For example, the priority rule may be based on at least priority indication of the related PSCCH/PSSCH.

For example, if HARQ feedback transmission of a LTE through a PSFCH for a plurality of UEs overlaps, the UE may select specific HARQ feedback transmission based on the priority rule. For example, the priority rule may be based on at least priority indication of the related PSCCH/PSSCH.

Hereinafter, positioning will be described.

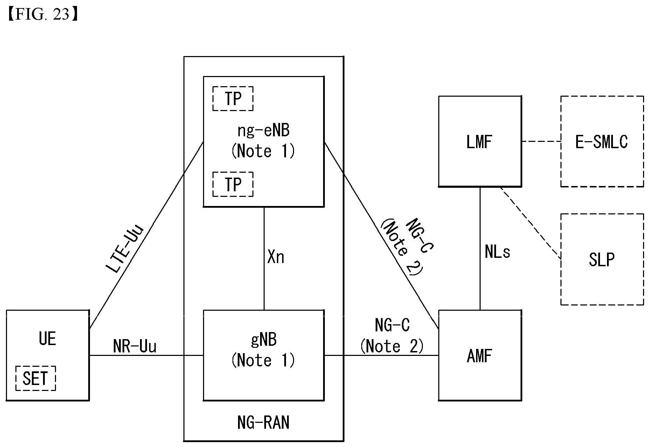

FIG. 23 shows an example of an architecture of a 5G system capable of positioning a UE having access to a next generation-radio access network (NG-RAN) or an E-UTRAN based on an embodiment of the present disclosure.

Referring to FIG. 23, an AMF may receive a request for a location service related to a specific target LTE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated location or the like of the LTE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for location estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location centre (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target LTE to obtain location measurement of the UE. For positioning of the target UE, the LMF may determine a positioning method based on a location service (LCS) client type, a requested quality of service (QoS), LTE positioning capabilities, gNB positioning capabilities, and ng-eNB positioning capabilities, or the like, and may apply such a positioning method to the serving gNB and/or the serving ng-eNB. In addition, the LMF may determine additional information such as a location estimation value for the target UE and accuracy of location estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, LTE barometric pressure sensors or the like. The UE may include an LCS application. The UE may communicate with a network to which the LTE has access, or may access the LCS application through another application included in the UE. The LCS application may include a measurement and calculation function required to determine a location of the UE. For example, the UE may include an independent positioning function such as a global positioning system (GPS), and may report the location of the LTE independent of NG-RAN transmission. Positioning information obtained independently as such may be utilized as assistance information of the positioning information obtained from the network.

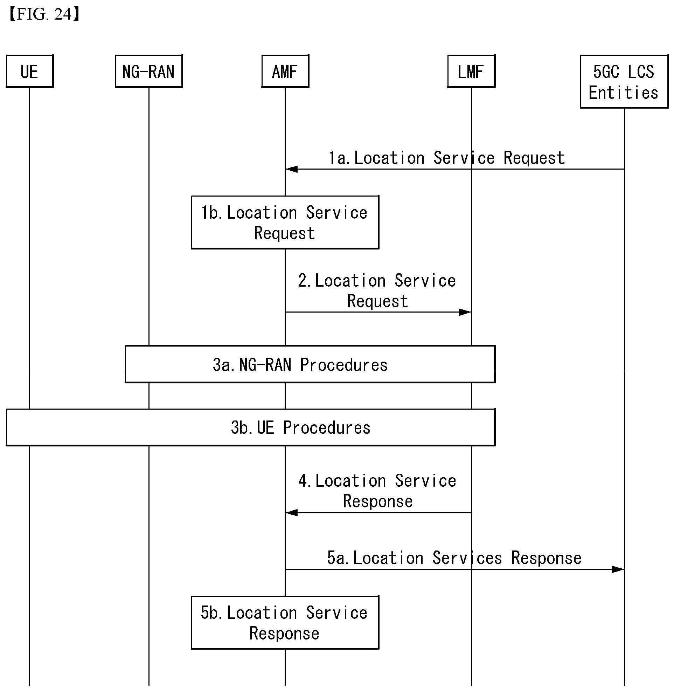

FIG. 24 shows an example of implementing a network for measuring a location of a UE based on an embodiment of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. D2. That is, it may be assumed in FIG. D2 that the UE is in a connected mode. However, due to signaling and data inactivation or the like, the signaling connection may be released by NG-RAN while a positioning process is performed.

A network operation process for measuring a location of a UE will be described in detail with reference to FIG. D2. In step a1, a 5GC entity such as GMLC may request a serving AMF to provide a location service for measuring a location of a target UE. However, even if the GMLC does not request for the location service, based on step 1b, the serving AMF may determine that the location service for measuring the location of the target LTE is required. For example, to measure the location of the UE for an emergency call, the serving AMF may determine to directly perform the location service.

Thereafter, the AMF may transmit the location service request to an LMF based on step 2, and the LMF may start location procedures to obtain location measurement data or location measurement assistance data together with a serving ng-eNB and a serving gNB. Additionally, based on step 3b, the LMF may start location procedures for downlink positioning together with the UE. For example, the LMF may transmit assistance data defined in 3GPP TS 36.355, or may obtain a location estimation value or a location measurement value. Meanwhile, step 3b may be performed additionally after step 3a is performed, or may be performed instead of step 3a.

In step 4, the LMF may provide a location service response to the AMF. In addition, the location service response may include information on whether location estimation of the LTE is successful and a location estimation value of the LTE. Thereafter, if the procedure of FIG. D2 is initiated by step a1, the AMF may transfer the location service response to a 5GC entity such as GMLC, and if the procedure of FIG. D2 is initiated by step 1b, the AMF may use the location service response to provide a location service related to an emergency call or the like.

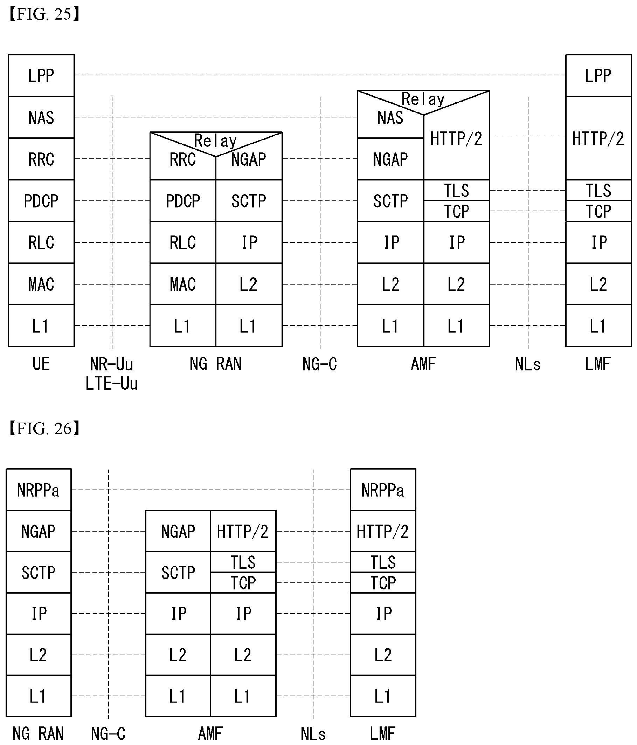

FIG. 25 shows an example of a protocol layer used to support LTE positioning protocol (LPP) message transmission between an LMF and a LTE based on an embodiment of the present disclosure.

An LPP PDU may be transmitted through a NAS PDU between an AMF and the UE. Referring to FIG. D3, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

FIG. 26 shows an example of a protocol layer used to support NR positioning protocol A (NRPPa) PDU transmission between an LMF and an NG-RAN node based on an embodiment of the present disclosure.

The NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a LTE associated procedure for transferring information on a specific LTE (e.g., location measurement information or the like), and a second type is a non LTE associated procedure for transferring information (e.g., , gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

(1) OTDOA (Observed Time Difference Of Arrival)

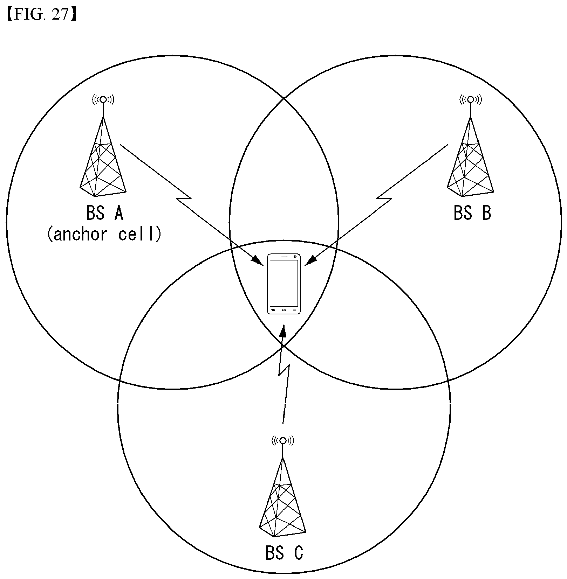

FIG. 27 is a drawing for explaining an OTDOA positioning method based on an embodiment of the present disclosure.

The OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a location of the LTE may be determined based on such a measurement result and geometric coordinates of neighboring TPs.

A LTE connected to a gNB may request for a measurement gap for OTDOA measurement from the TP. If the LTE cannot recognize a single frequency network (SFN) for at least one TP in the OTDOA assistance data, the LTE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a location of a LTE. In this case, since accuracy and/or uncertainty for each TOA measurement may be present, the estimated location of the UE may be known as a specific range based on measurement uncertainty.

For example, RSTD for two TPs may be calculated based on Equation D1.

[Equation 1]

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Herein, c may be the speed of light, {xt, yt} may be a (unknown) coordinate of a target LTE, {xi, yi} may be a coordinate of a (known) TP, and {x1, y1} may be a coordinate of a reference TP (or another TP). Herein, (Ti-T1) may be referred to as "real time differences (RTDs)" as a transmission time offset between two TPs, and ni, n1 may represent values related to LTE TOA measurement errors.

(2) E-CID (Enhanced Cell ID)

In a cell ID (CID) positioning method, a location of a LTE may be measured through geometric information of a serving ng-eNB, serving gNB, and/or serving cell of the LTE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE location estimation value. In the E-CID positioning method, although some of the measurement methods which are the same as those used in a measurement control system of an RRC protocol may be used, additional measurement is not performed in general only for location measurement of the LTE. In other words, a measurement configuration or a measurement control message may not be provided additionally to measure the location of the LTE. Also, the LTE may not expect that an additional measurement operation only for location measurement will be requested, and may report a measurement value obtained through measurement methods in which the UE can perform measurement in a general manner.

For example, the serving gNB may use an E-UTRA measurement value provided from the LTE to implement the E-CID positioning method.

Examples of a measurement element that can be used for E-CID positioning may be as follows.

- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.

$$\text{TADV Type 1} = (\text{ng-eNB Rx-Tx time difference}) + (\text{UE E-UTRA Rx-Tx time difference})$$

$$\text{TADV Type 2} = \text{ng-eNB Rx-Tx time difference}$$

Meanwhile, AoA may be used to measure a direction of the UE. The AoA may be defined as an estimation angle with respect to the location of the LTE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

(3) UTDOA (Uplink Time Difference of Arrival)

UTDOA is a method of determining a location of a UE by estimating an arrival time of SRS. When calculating an estimated SRS arrival time, the location of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

Hereinafter, synchronization acquisition of an SL UE will be described.

In time division multiple access (TDMA) and frequency division multiple access (FDMA) systems, accurate time and frequency synchronization is essential. If the time and frequency synchronization is not accurate, system performance may be degraded due to inter symbol interference (ISI) and inter carrier interference (ICI). The same is true for V2X. In V2X, for time/frequency synchronization, sidelink synchronization signal (SLSS) may be used in a physical layer, and master information block-sidelink-V2X (MIB-SL-V2X) may be used in a radio link control (RLC) layer.

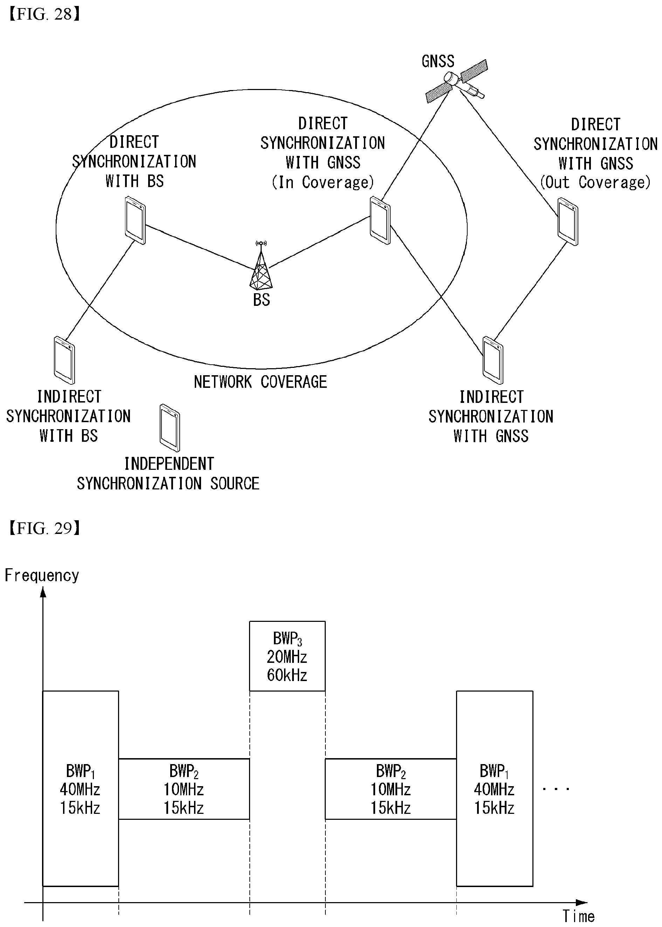

FIG. 28 shows a synchronization source or synchronization reference of V2X based on an embodiment of the present disclosure.

Referring to FIG. 28, in V2X, a LTE may be directly synchronized with a global navigation satellite system (GNSS), or may be indirectly synchronized with the GNSS through a UE (inside network coverage or outside network coverage) directly synchronized with the GNSS. If the GNSS is configured as the synchronization source, the UE may calculate a DFN and a subframe number by using a coordinated universal time (UTC) and a (pre-)configured direct frame number (DFN) offset.

Alternatively, the UE may be directly synchronized with a BS, or may be synchronized with another UE which is time/frequency-synchronized with the BS. For example, the BS may be an eNB or a gNB. For example, if the UE is inside the network coverage, the UE may receive synchronization information provided by the BS, and may be directly synchronized with the BS. Thereafter, the UE may provide the synchronization information to adjacent another UE. If BS timing is configured based on synchronization, for synchronization and downlink measurement, the LTE may be dependent on a cell related to a corresponding frequency (when it is inside the cell coverage at the frequency), or a primary cell or a serving cell (when it is outside the cell coverage at the frequency).

The BS (e.g., serving cell) may provide a synchronization configuration for a carrier used in V2X or SL communication. In this case, the UE may conform to the synchronization configuration received from the BS. If the UE fails to detect any cell in a carrier used in the V2X or SL communication and fails to receive the synchronization configuration from the serving cell, the LTE may conform to a pre-configured synchronization configuration.

Alternatively, the LTE may be synchronized with another LTE which fails to obtain synchronization information directly or indirectly from the BS or the GNSS. A synchronization source or preference may be pre-configured to the LTE. Alternatively, the synchronization source and preference may be configured through a control message provided by the BS.

An SL synchronization source may be associated/related with a synchronization priority. For example, a relation between the synchronization source and the synchronization priority may be defined as shown in Table 14 or Table 15. Table 14 or Table 15 are for exemplary purposes only, and the relation between the synchronization source and the synchronization priority may be defined in various forms.

[Table 14]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 15]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | BS | GNSS |
| P4 | All UEs directly synchronized with BS | All UEs directly synchronized with GNSS |
| P5 | All UEs indirectly synchronized with BS | All UEs indirectly synchronized with GNSS |
| P6 | Remaining LTE(s) having low priority | Remaining LTE(s) having low priority |

In Table 14 or Table 15, P0 may denote a highest priority, and P6 may denote a lowest priority. In Table 14 or Table 15, the BS may include at least one of a gNB and an eNB.

Whether to use GNSS-based synchronization or BS-based synchronization may be (pre-)configured. In a single-carrier operation, the UE may derive transmission timing of the LTE from an available synchronization reference having the highest priority.

Hereinafter, a bandwidth part (BWP) and a resource pool will be described.

When using bandwidth adaptation (BA), a reception bandwidth and transmission bandwidth of a LTE are not necessarily as large as a bandwidth of a cell, and the reception bandwidth and transmission bandwidth of the BS may be adjusted. For example, a network/BS may inform the UE of bandwidth adjustment. For example, the UE receive information/configuration for bandwidth adjustment from the network/BS. In this case, the UE may perform bandwidth adjustment based on the received information/configuration. For example, the bandwidth adjustment may include an increase/decrease of the bandwidth, a location change of the bandwidth, or a change in subcarrier spacing of the bandwidth.

For example, the bandwidth may be decreased during a period in which activity is low to save power. For example, the location of the bandwidth may move in a frequency domain. For example, the location of the bandwidth may move in the frequency domain to increase scheduling flexibility. For example, the subcarrier spacing of the bandwidth may be changed. For example, the subcarrier spacing of the bandwidth may be changed to allow a different service. A subset of a total cell bandwidth of a cell may be referred to as a bandwidth part (BWP). The BA may be performed when the BS/network configures the BWP to the UE and the BS/network informs the UE of the BWP currently in an active state among the configured BWPs.

FIG. 29 shows a plurality of BWPs based on an embodiment of the present disclosure.

Referring to FIG. 29, a BWP1 having a bandwidth of 40 MHz and a subcarrier spacing of 15 kHz, a BWP2 having a bandwidth of 10 MHz and a subcarrier spacing of 15 kHz, and a BWP3 having a bandwidth of 20 MHz and a subcarrier spacing of 60 kHz may be configured.

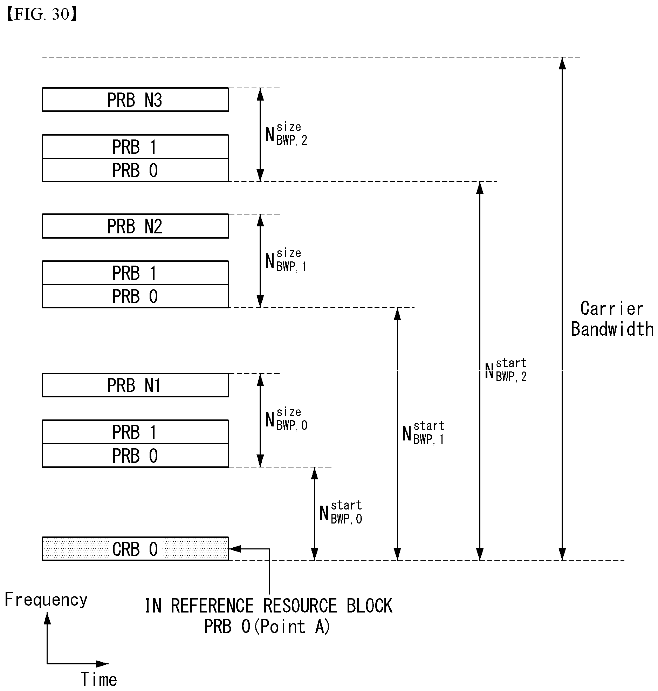

FIG. 30 shows a BWP based on an embodiment of the present disclosure. It is assumed in the embodiment of FIG. 30 that the number of BWPs is 3.

Referring to FIG. 30, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

The BWP may be defined for SL. The same SL BWP may be used in transmission and reception. For example, a transmitting LTE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. The SL BWP may be (pre-configured in a carrier with respect to an out-of-coverage NR V2X UE and an RRC_IDLE UE. For the UE in the RRC_CONNECTED mode, at least one SL BWP may be activated in the carrier.

A resource pool may be a group of time-frequency resources that may be used for SL transmission and/or SL reception. From a perspective of the UE, time-domain resources in the resource pool may not be consecutive. A plurality of resource pools may be (pre-)configured to the UE in one carrier. From a perspective of a physical layer, the LTE may perform unicast, groupcast, and broadcast communication by using the configured or pre-configured resource pool.

Hereinafter, power control will be described.

A method in which a UE controls uplink transmit power thereof may include open loop power control (OLPC) and closed loop power control (CLPC). Based on the OLPC, the UE may estimate a downlink pathloss from a BS of a cell to which the UE belongs, and the UE may perform power control in such a manner that the pathloss is compensated for. For example, based on the OLPC, if a distance between the UE and the BS further increases and thus a downlink pathloss increases, the UE may control uplink power in such a manner that uplink transmit power is further increased. Based on the CLPC, the UE may receive information (e.g., a control signal) required to adjust uplink transmit power from the BS, and the LTE may control uplink power based on the information received from the BS. That is, based on the CLPC, the UE may control the uplink power based on a direct power control command received from the BS.

The OLPC may be supported in SL. Specifically, when the transmitting UE is inside the coverage of the BS, the BS may enable OPLC for unicast, groupcast, and broadcast transmission based on the pathloss between the transmitting UE and a serving BS of the transmitting UE. If the transmitting UE receives information/configuration for enabling the OLPC from the BS, the transmitting UE may enable OLPC for unicast, groupcast, or broadcast transmission. This may be to mitigate interference for uplink reception of the BS.

Additionally, at least in case of unicast, a configuration may be enabled to use the pathloss between the transmitting UE and the receiving LTE. For example, the configuration may be pre-configured for the UE. The receiving UE may report an SL channel measurement result (e.g., SL RSRP) to the transmitting LTE, and the transmitting LTE may derive pathloss estimation from the SL channel measurement result reported by the receiving UE. For example, in SL, if the transmitting UE transmits a reference signal to the receiving UE, the receiving UE may estimate a channel between the transmitting UE and the receiving UE based on the reference signal transmitted by the transmitting UE. In addition, the receiving UE may transmit the SL channel measurement result to the transmitting UE. In addition, the transmitting UE may estimate the SL pathloss from the receiving UE based on the SL channel measurement result. In addition, the transmitting UE may perform SL power control by compensating for the estimated pathloss, and may perform SL transmission for the receiving UE. Based on the OLPC in SL, for example, if a distance between the transmitting UE and the receiving UE further increases and thus the SL pathloss increases, the transmitting UE may control SL transmit power in such a manner that the SL transmit power is further increased. The power control may be applied in SL physical channel (e.g., PSCCH, PSSCH, physical sidelink feedback channel (PSFCH)) and/or SL signal transmission.

In order to support the OLPC, at least in case of unicast, long-term measurement (e.g., L3 filtering) may be supported on SL.

For example, total SL transmit power may be identical in symbols used for PSCCH and/or PSSCH transmission in a slot. For example, maximum SL transmit power may be configured for the transmitting UE or may be pre-configured.

For example, in case of the SL OLPC, the transmitting UE may be configured to use only a downlink pathloss (e.g., a pathloss between the transmitting LTE and the BS). For example, in case of the SL OLPC, the transmitting LTE may be configured to use only an SL pathloss (e.g., a pathloss between the transmitting UE and the receiving UE). For example, in case of the SL OLPC, the transmitting LTE may be configured to use a downlink pathloss and the SL pathloss.

For example, if the SL OLPC is configured to use both the downlink pathloss and the SL pathloss, the transmitting LTE may determine a minimum value as transmit power among power obtained based on the downlink pathloss and power obtained based on the SL pathloss. For example, P0 and an alpha value may be configured separately for the downlink pathloss and the SL pathloss or may be pre-configured. For example, P0 may be a user-specific parameter related to SINR received on average. For example, the alpha value may be a weight value for the pathloss.

Hereinafter, sidelink (SL) congestion control will be described.

If a LTE autonomously determines an SL transmission resource, the LTE also autonomously determines a size and frequency of use for a resource used by the UE. Of course, due to a constraint from a network or the like, it may be restricted to use a resource size or frequency of use, which is greater than or equal to a specific level. However, if all UEs use a relatively great amount of resources in a situation where many UEs are concentrated in a specific region at a specific time, overall performance may significantly deteriorate due to mutual interference.

Accordingly, the UE may need to observe a channel situation. If it is determined that an excessively great amount of resources are consumed, it is preferable that the UE autonomously decreases the use of resources. In the present disclosure, this may be defined as congestion control (CR). For example, the UE may determine whether energy measured in a unit time/frequency resource is greater than or equal to a specific level, and may adjust an amount and frequency of use for its transmission resource based on a ratio of the unit time/frequency resource in which the energy greater than or equal to the specific level is observed. In the present disclosure, the ratio of the time/frequency resource in which the energy greater than or equal to the specific level is observed may be defined as a channel busy ratio (CBR). The UE may measure the CBR for a channel/frequency. Additionally, the UE may transmit the measured CBR to the network/BS.

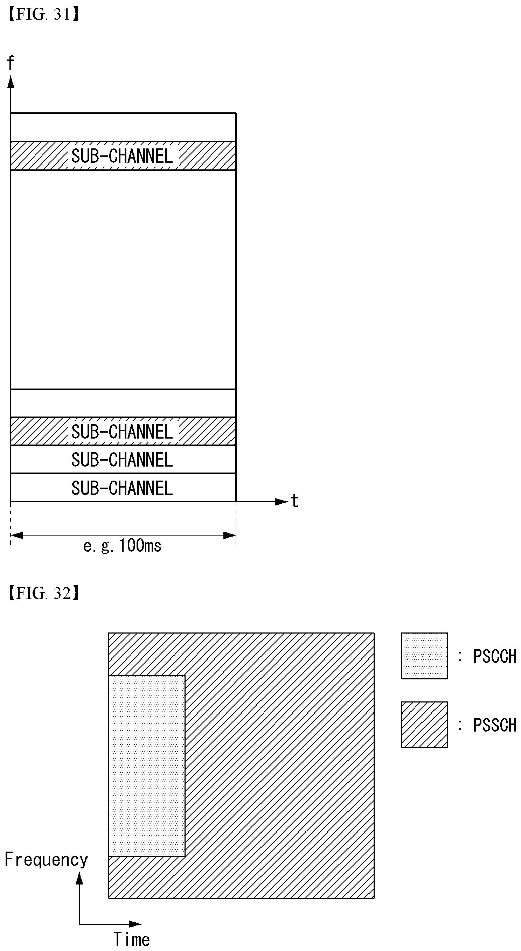

FIG. 31 shows a resource unit for CBR measurement based on an embodiment of the present disclosure.

Referring to FIG. 31, CBR may denote the number of sub-channels in which a measurement result value of a received signal strength indicator (RSSI) has a value greater than or equal to a pre-configured threshold as a result of measuring the RSSI by a LTE on a sub-channel basis for a specific period (e.g., 100 ms). Alternatively, the CBR may denote a ratio of sub-channels having a value greater than or equal to a pre-configured threshold among sub-channels for a specific duration. For example, in the embodiment of FIG. G1, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the BS.

For example, as shown in the embodiment of FIG. G2, if a PSCCH and a PSSCH are multiplexed, the UE may perform one CBR measurement for one resource pool. Herein, if a PSFCH resource is configured or pre-configured, the PSFCH resource may be excluded in the CBR measurement.

Further, congestion control considering a priority of traffic (e.g. packet) may be necessary. To this end, for example, the LTE may measure a channel occupancy ratio (CR). Specifically, the UE may measure the CBR, and the UE may determine a maximum value $CRlimit_k$ of a channel occupancy ratio k ($CR_k$) that can be occupied by traffic corresponding to each priority (e.g., k) based on the CBR. For example, the UE may derive the maximum value $CRlimit_k$ of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the LTE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the LTE may perform SL congestion control by using a method of adjusting a level of transmit power, dropping a packet, determining whether retransmission is to be performed, adjusting a transmission RB size (MCS coordination), or the like.

Hereinafter, physical-layer processing for SL will be described.

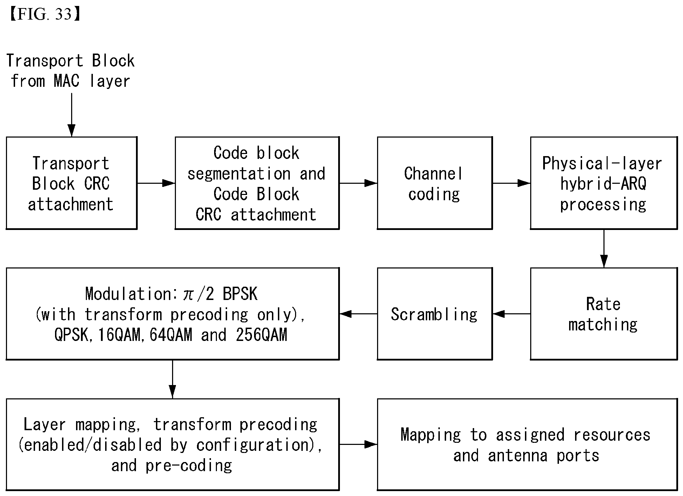

FIG. 33 shows physical layer processing for SL based on an embodiment of the present disclosure.

A UE may split a long-length transport block (TB) into several short-length code blocks (CBs). In addition, the LTE may perform a coding process on each of the plurality of short-length CBs, and thereafter may combine the plurality of short-length CBs into one. In addition, the UE may transmit the combined one CB to another UE.

Specifically, referring to FIG. H1, first, the UE may perform cyclic redundancy check (CRC) coding process on the long-length TB. The UE may attach the CRC to the TB. Thereafter, the UE may split a total-length CRC-attached TB into a plurality of short-length CBs. In addition, the UE may perform again the CRC coding process on each of the plurality of short-length CBs. The UE may attach the CRC to the CB. Therefore, each CB may include the CRC. In addition, each CRC-attached CB may be subjected to channel coding by being input to a channel encoder. Thereafter, the UE may perform rate matching, bit-unit scrambling, modulation, layer mapping, precoding, and antenna mapping on each CB, and the UE may transmit the result to a receiving end.

Additionally, a channel coding scheme described with reference to FIG. 21 and FIG. 22 may be applied to SL. For example, uplink/downlink physical channels and signals described with reference to FIG. 21 and FIG. 22 may be replaced with SL physical channels and signals. For example, channel coding defined for a data channel and control channel at NR Uu may be defined similarly to channel coding for the data channel and control channel on each NR SL.

In the present disclosure, a wording "configuration or definition" may be interpreted as being (pre-)configured from the BS or the network (via pre-defined signaling (e.g., SIB, MAC signaling, or RRC signaling). For example, "A may be configured" may include "the BS or network (pre-)configures/(pre-)defines or announces A for the LTE". Alternatively, the wording "configuration or definition" may be interpreted as being pre-configured or pre-defined by a system. For example, "A may be configured" may include "A is pre-configured/pre-defined by the system".

### Terminology arrangement

Hereinafter, for convenience of description, the following abbreviations/acronym may be used in the present disclosure.

ACK/NACK - Acknowledgement/No Acknowledgenment
AGC - Automatic Gain Control
AS - Access Stratum
CB - Codeblock
CBG/CG - Codeblock Group
CBR - Channel Busy Ratio
CE - Control Element
CFO - Carrier Frequency Offset
CG - Configured Grant
CP - Cyclic Prefix
CRC - Cyclic Redundancy Check
CSI -Channel State Information
CSI-RS -Channel State Information Reference Signal
DCI - Downlink Control Channel
DL - Downlink
DM-RS - Demodulation RS
ECP - Extended CP
FDD - Frequency Division Duplex
HARQ - Hybrid Automatic Repeat Request
L1 - Layer 1
L2 - Layer 2
LBS - Location Based Service
LCS - Location Service
LSB - Least Significant Bit
MAC - Medium Access Control
MCS - Modulation Coding Scheme
MIB - Master Information Block
MPR - Maximum Power Reduction
MSB - Most Significant Bit
NAS - Non-Access Stratum
NCP - Normal CP
NDI - New Data Indicator
PBCH - Physical Broadcast Channel
PDCCH - Physical Downlink Control Channel
PDCP - Packet Data Convergence Protocol
PDSCH - Physical Downlink Shared Channel
PDU - Protocol Data Unit
PRS - Positioning Reference Signal
PSBCH - Physical Sidelink Broadcast Channel
PSCCH - Physical Sidelink Control Channel
PSFCH - Physical Sidelink Feedback Channel
PSS - Primary Synchronization Signal

PSSCH - Physical Sidelink Shared Channel
PUCCH - Physical Uplink Control Channel
PUSCH - Physical Uplink Shared Channel
QoS - Quality of Service
RB - Resource Block
RLC - Radio Link Control
RLM - Radio Link Monitoring
RLF - Radio Link Failure
RRC - Radio Resource Control
RS - Reference Signal
RSRP - Reference Signal Received Power
RSRQ - Reference Signal Received Quality
RSSI - Received Signal Strength Indicator
RSTD - Reference Signal Time Difference
RSU - Road Side Unit
RTT - Round Trip Time
RV - Redundancy Version
SCI - Sidelink Control Information
SCS - Sub-Carrier Spacing
SDAP - Service Data Adaptation Protocol
SIB - System Information Block
SL - Sidelink
SL OLPC - Open Loop Power Control
SL PL - Sidelink Pathloss
SLSSID - SL Synchronixatino Signal Identification
SNR - Signal-to-Noise Ratio
SPP - Sidelink Positioning Protocol
SPS - Semi-Persistent Scheduling
S-PSS - Sidelink PSS
SRS - Sounding Reference Signal
SSB - Synchronization Signal Block
SSS - Secondary Synchronization Signal
S-SSB - Sidelink SSB
S-SSS - Sidelink SSS
TB - Transport Block
TDD - Time Division Duplex
TDOA - Time Difference of Arriaval
TOA - Time of Arriaval
UE - User Equipment/End
UL - Uplink
Uu-PSS - Uu link PSS
Uu-SSS - Uu link SSS
XOR - Exclusive OR

Hereinafter, in the present disclosure, a transmitting UE (TX UE) may be a UE that transmits data to a (target) receiving UE (RX UE). For example, the TX UE may be a UE that performs PSCCH and/or PSSCH transmission. And/or, the TX UE may be a UE that transmits an SL CSI-RS and/or SL CSI reporting request indicator to the (target) RX UE. And/or, the TX LTE may be a LTE that transmits a (control) channel (e.g., PSCCH, PSSCH, etc.) and/or a reference signal (e.g., DM-RS, CSI-RS, etc.) on the (control) channel, to be used for an SL RLM and/or SL RLF operation of the (target) RX UE.

Further, in the present disclosure, the receiving UE (RX UE) may be a UE that transmits an SL HARQ feedback to the TX UE based on (i) whether decoding of data received from the transmitting UE (TX UE) is successful and/or (ii) whether detection/decoding of the PSCCH (related to PSSCH scheduling) transmitted by the TX UE is successful. And/or, the RX UE may be a UE that performs SL CSI transmission to the TX UE based on the SL CSI-RS and/or SL CSI reporting request indicator received from the TX UE. And/or, the RX UE may be a LTE that transmits, to the TX LTE, an SL (L1) RSRP measurement value measured based on a (pre-defined) reference signal and/or SL (L1) RSRP reporting request indicator received from the TX UE. And/or, the RX UE may be a UE that transmits data of the RX UE itself to the TX LTE. And/or, the RX LTE may be a LTE that performs the SL RLM and/or SL RLF operation based on a (pre-configured) (control) channel received from the TX UE and/or the reference signal on the (control) channel.

In the present disclosure, for example, when the RX UE transmits SL HARQ feedback information for the PSSCH and/or PSCCH received from the TX LTE, the following schemes or some of the following schemes may be considered. For example, the following schemes or some of the following schemes may also be limitedly applied only when the RX UE successfully decodes/detects the PSCCH for scheduling the PSSCH.

Option 1) The RX UE may transmit, to the TX UE, NACK information only when decoding/reception of the PSSCH received from the TX UE is unsuccessful.

Option 2) The RX UE may transmit the NACK information to the TX UE if decoding/reception of the PSSCH received from the TX UE is successful, and may transmit ACK information to the TX UE if decoding/reception of the PSSCH is unsuccessful.

In the present disclosure, for example, the TX UE may transmit, to the RX UE, the following information or some of the following information through the SCI. For example, the TX UE may transmit some or all of the following information to the RX UE through the first SCI and/or the second SCI.

- PSSCH (and/or PSCCH) related resource allocation information (e.g., a time/frequency resource location/number, resource reservation information (e.g., periodicity))
- SL CSI reporting request indicator or SL (L1) RSRP (and/or SL (L1) RSRQ and/or SL (L1) RSSI) reporting request indicator
- SL CSI transmission indicator (on PSSCH) (or SL (L1) RSRP (and/or SL (L1) RSRQ and/or SL (L1) RSSI) information transmission indicator)
- MCS information
- TX POWER information
- L1 DESTINATION ID information and/or L1 SOURCE ID information
- SL HARQ PROCESS ID information
- NDI information
- RV information
- (Transmission traffic/packet related) QoS information (e.g., priority information)
- SL CSI-RS transmission indicator or (transmitted) SL CSI-RS antenna port number information
- Positional information of the TX LTE or position (or distance area) information of a target RX UE (requesting the SL HARQ feedback)
- Reference signal (e.g., DM-RS, etc.) information related to decoding (and/or channel estimation) of data transmitted through the PSSCH. For example, the reference signal information may be information related to a pattern of a (time-frequency) mapping resource of the DM-RS, RANK information, antenna port index information, etc.

In the present disclosure, for example, since the TX UE can transmit, to the RX UE, the SCI, the first SCI, and/or the second SCI through the PSCCH, the PSCCH may be replaced/substituted with (i) SCI and/or (ii) first SCI and/or (iii) second SCI. And/or, the SCI may be replaced/substituted with the PSCCH and/or first SCI and/or second SCI. And/or, for example, since the TX UE can transmit the second SCI to the RX UE through the PSSCH, the PSSCH may be replaced/substituted with the second SCI.

In the present disclosure, for example, when SCI configuration fields are categorized into two groups by considering a (relatively) high SCI payload size, SCI including a first SCI configuration field group may be referred to as first SCI and SCI including a second SCI configuration field group may be referred to as second SCI. Further, for example, the first SCI may be transmitted to the RX LTE through the PSCCH. Further, for example, the second SCI may be transmitted to the RX UE through (standalone) PSCCH or piggybacked and transmitted jointly with data through the PSSCH.

In the present disclosure, for example, "configuration" or "definition" may mean (PRE)CONFIGURATION (to be resource pool specific) (via pre-defined signaling (e.g., SIB, MAC, RRC, etc.) from the BS or the network.

In the present disclosure, for example, since RLF may be determined based on an OUT-OF-SYNCH (OOS) indicator or an IN-SYNCH (IS) indicator, the RLF may be replaced/substituted with OUT-OF-SYNCH (OOS) or IN-SYNCH (IS).

In the present disclosure, for example, RB may be replaced/substituted with SUBCARRIER. Further, as one example, in the present disclosure, PACKET or TRAFFIC may be replaced/substituted with TB or MAC PDU according to a transmitted layer.

In the present disclosure, CBG or CG may be replaced/substituted with TB.

In the present disclosure, for example, SOURCE ID may be replaced/substituted with DESTINATION ID.

In the present disclosure, for example, L1 ID may be replaced/substituted with L2 ID. For example, L1 ID may be L1 SOURCE ID or L1 DESTINATION ID. For example, L2 ID may be L2 SOURCE ID or L2 DESTINATION ID.

In the present disclosure, for example, an operation of reserving/selecting/determining a retransmission resource by the transmitting LTE may mean an operation of reserving/selecting/determining a potential retransmission resource of which actual use/nonuse will be determined based on the SL HARQ feedback information received from the receiving UE by the transmitting UE.

In the present disclosure, SL MODE 1 may mean a resource allocation scheme or a communication scheme in which the BS directly schedules a sidelink transmission (SL TX) resource of the UE through pre-defined signaling (e.g., DCI). Further, for example, SL MODE 2 may mean a resource allocation scheme or a communication scheme in which the UE independently selects the SL TX resource within a resource pool configured or pre-configured from the BS or network.

In the present disclosure, for convenience of description, a (physical) channel that the RX UE uses when transmitting at least one of the following information to the TX UE may be referred to as PSFCH.

- SL HARQ feedback, SL CSI, SL (L1) RSRP

A UE may not support all or part of SL reception operation. For example, a specific LTE (hereinafter, a type A P-UE or a first type LTE) can support only an SL transmission operation and may not support an SL reception operation. Further, a specific UE (hereinafter, a type B P-UE or a second type LTE) can support the SL transmission operation and support PSFCH reception and/or S-SSB reception operation. Further, a specific UE (hereinafter, a type D P-UE or a third type LTE) can support both the SL transmission and reception operations. As above, an object of limiting all or part of the SL reception operation of the LTE may be to simplify the UE implementation or reduce the cost, and to lower power consumption. The present disclosure proposes a synchronization method between LTEs when at least one of LTEs performing synchronization is a UE in which all or part of the SL reception operation is limited.

When the UE performs sidelink communication, various synchronization sources may exist from a UE perspective. For example, the UE may determine a sidelink slot and a frame boundary based on GNSS. For another example, the LTE may determine a sidelink slot and a frame boundary based on gNB or eNB corresponding to a serving cell of the UE. More specifically, the UE may determine a sidelink slot and a frame boundary based on DL frame boundary or SFN0 of gNB or eNB. For another example, the LTE may determine a sidelink slot and a frame boundary based on other UE. More specifically, when the UE determines a sidelink slot and a frame boundary based on other UE, the UE may detect S-SSB transmitted by the other UE and determine a sidelink slot and a frame boundary based on the detected S-SSB. For a UE (type A P-LTE or type B P-LTE) that does not perform PSCCH/PSSCH reception, the UE may transmit the S-SSB to the other UE so that the other UE receives PSCCH/PSSCH transmitted by the UE.

## Type A P-UE (first type UE)

For a LTE (type A P-LTE) which does not support SL reception, the LTE may perform SL transmission (e.g., PSCCH/PSSCH) and/or S-SSB transmission only if a synchronization source is GNSS or a base station, and the SL transmission (e.g., PSCCH/PSSCH) and/or the S-SSB transmission may not be required or expected for other synchronization sources. The other synchronization sources may be one of the type A P-UE, the type B P-UE, and the type D-UE. The UE (type A P-UE) which does not support the SL reception may perform (i) the SL transmission (e.g., PSCCH/PSSCH) and/or (ii) the S-SSB transmission only if a synchronization source on which synchronization is to be performed is a source with highest priority, and the SL transmission (e.g., PSCCH/PSSCH) and/or the S-SSB transmission may not be required or expected for other synchronization sources. That is, if a type of a LTE performing synchronization with other UE which is the synchronization source is the type A P-UE, and a type of the UE which is the synchronization source is one of the type A P-UE and the type B P-LTE, the synchronization between the UEs may not be performed. A reason why the LTE requires/expects the LTE (type A P-LTE), which does not support the SL reception, to perform (i) the SL transmission (e.g., PSCCH/PSSCH) and/or (ii) the S-SSB transmission only for a synchronization source which is the highest priority source is that because the UE which does not support the SL reception cannot receive S-SSB from other LTE, the SL may not operate properly if the other UE is the synchronization source.

## Type B P-UE (second type UE)

For a LTE (type B P-LTE) which supports S-SSB and/or PSFCH reception and does not support other SL reception (e.g., PSCCH/PSSCH), when the UE uses S-SSB transmitted by a LTE, which does not support PSCCH/PSSCH reception, for synchronization, the LTEs cannot receive PSCCH/PSSCH between them. Thus, it may be required to avoid a situation where synchronization is performed between the LTE (type B P-LTE) which supports the S-SSB and/or PSFCH reception and does not support the other SL reception (e.g., PSCCH/PSSCH) and the UE which does not support the PSCCH/PSSCH reception, and to reduce the frequency at which the synchronization is performed. That is, if a type of a LTE performing synchronization with other LTE which is a synchronization source is the type B P-LTE, and a type of a LTE which is the synchronization source is one of the type A P-UE and the type B P-UE, the synchronization between the UEs may not be performed. In this instance, based on whether the UE supports the PSCCH/PSSCH reception and/or a type of the UE, RESERVED bit field values of the PSBCH transmitted by the LTE may be differently (pre-)set and/or used. For example, RESERVED bit field values of the PSBCH transmitted by the UE supporting the PSCCH/PSSCH reception and the LTE which does not support the PSCCH/PSSCH reception may be differently set. For another example, based on whether the UE supports the PSCCH/PSSCH reception and/or a type of the UE, a transmission type of the S-SSB (S-PSS and/or S-SSS and/or PSBCH DMRS sequence and/or PSBCH scrambling sequence and/or PSBCH CRC masking sequence) may be differently configured. That is, the transmission type of the S-SSB may be determined by differently applying a sequence related to the S-SSB to the S-SSB transmission based on whether the LTE supports the PSCCH/PSSCH reception and/or a type of the LTE, and the sequence related to the S-SSB may include a sequence related to S-PSS and/or S-SSS and/or a PSBCH DMRS sequence and/or a PSBCH scrambling sequence and/or a PSBCH CRC masking sequence. For another example, the UE which does not support the PSCCH/PSSCH reception may apply an additional offset value to a random seed when generating a sequence for the S-SSB. The additional offset value may be pre-defined or (preset. For another example, the LTE which does not support the PSCCH/PSSCH reception may apply an additional offset value to the sequence value after generating a sequence for the S-SSB. The additional offset value may be pre-defined or (pre-)set. In the present embodiment, a receiving UE may classify/distinguish/identify information (e.g., whether to support the PSCCH/PSSCH reception) on a UE transmitting the S-SSB based on the above-described methods or its combinations.

In addition, the LTE (type B P-LTE) which supports the S-SSB and/or PSFCH reception and does not support the other SL reception may always exclude the LTE, which does not support the PSCCH/PSSCH reception, from a synchronization source perspective. For example, the UE (type B P-UE) which supports the S-SSB and/or PSFCH reception and does not support the other SL reception may configure the UE, which does not support the PSCCH/PSSCH reception, to a lowest priority from the synchronization source perspective. More specifically, if there is a plurality of LTEs which is a synchronization source with the same priority and/or if there is a plurality of cases in which an RSRP measurement value based on the S-SSB transmitted by a UE that can be the synchronization source is greater than or equal to a (preset threshold, the LTE (type B P-LTE) which supports the S-SSB and/or PSFCH reception and does not support the other SL reception may configure the UE, which does not support the PSCCH/PSSCH reception, to a lowest priority from the synchronization source perspective when selecting a synchronization source UE.

### Type D P-UE (third type UE)

For a UE performing PSCCH/PSSCH reception, when other LTE does not perform synchronization with the UE, sidelink communication of the UE may be inefficient. That is, the LTE supporting the PSCCH/PSSCH reception may configure a priority of S-SSB transmitted by a UE (e.g., type A or type B P-UE), which does not perform the PSCCH/PSSCH reception, to a highest priority when selecting a synchronization source. For example, the UE supporting the PSCCH/PSSCH reception may separately (pre-)configure the priority of S-SSB transmitted by the UE (e.g., type A or type B P-UE), which does not perform the PSCCH/PSSCH reception, when selecting the synchronization source. More specifically, the UE supporting the PSCCH/PSSCH reception may configure the priority of S-SSB transmitted by the LTE (e.g., type A or type B P-UE), which does not perform the PSCCH/PSSCH reception, to a highest value among synchronization sources with the same priority when selecting the synchronization source. For another example, if a synchronization source of the LTE supporting the PSCCH/PSSCH reception is other UE and/or if there is a plurality of cases which an RSRP measurement value for the S-SSB with the same priority transmitted by the UE is greater than or equal to a (pre-)set threshold, the LTE supporting the PSCCH/PSSCH reception may configure the priority of S-SSB transmitted by the UE, which does not perform the PSCCH/PSSCH reception, to a relatively high priority.

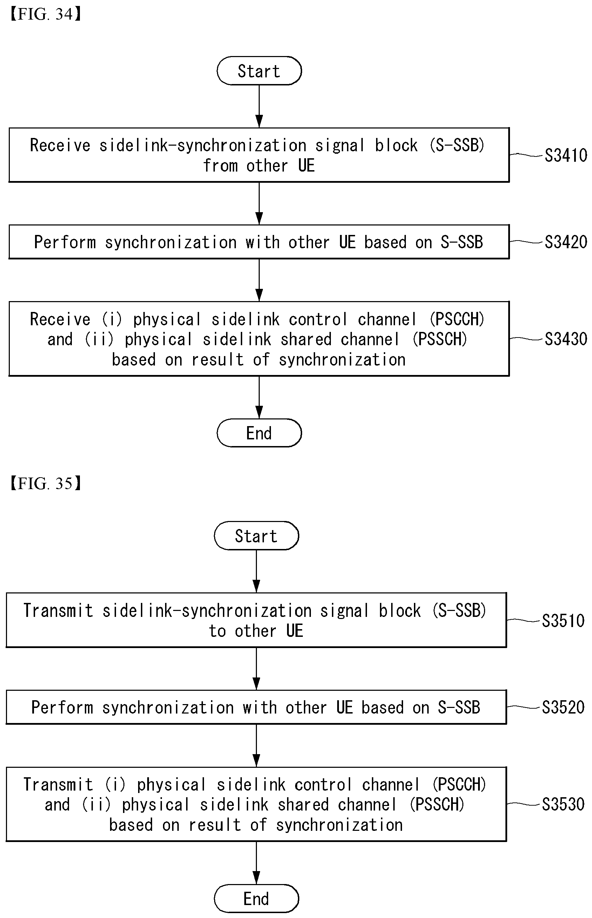

FIG. 34 is a flowchart illustrating an example where a sidelink communication method described in the present disclosure is performed by a receiving UE.

First, the UE receives a sidelink-synchronization signal block (S-SSB) from other UE, in S3410.

Next, the UE performs synchronization with the other UE based on the S-SSB, in S3420.

Next, the UE receives (i) a physical sidelink control channel (PSCCH) and (ii) a physical sidelink shared channel (PSSCH) based on a result of the synchronization, in S3430.

The S-SSB includes information on a type of the other LTE, and the result of synchronization is determined based on (i) the information on the type of the other UE and (ii) a type of the UE.

The UE includes one or more transceivers, one or more processors, and one or more memories.

The one or more memories store instructions for operations executed by the one or more processors and are connected to the one or more processors. The operations may include the operations described in FIG. 34.

Further, in a device including one or more memories and one or more processors operatively connected to the one or more memories, the one or more processors may control the device so that the device performs the operations described in FIG. 34.

Further, in one or more non-transitory computer readable mediums storing one or more instructions, the one or more instructions executable by one or more processors may allow a UE to perform the operations described in FIG. 34.

FIG. 35 is a flowchart illustrating an example where a sidelink communication method described in the present disclosure is performed by a transmitting UE.

The UE transmits a sidelink-synchronization signal block (S-SSB) to other UE, in S3510.

Next, the UE performs synchronization with the other UE based on the S-SSB, in S3520.

Next, the UE transmits (i) a physical sidelink control channel (PSCCH) and (ii) a physical sidelink shared channel (PSSCH) based on a result of the synchronization, in S3530.

The S-SSB includes information on a type of the other LTE, and the result of synchronization is determined based on (i) the information on the type of the other UE and (ii) a type of the UE.

The UE includes one or more transceivers, one or more processors, and one or more memories.

The one or more memories store instructions for operations executed by the one or more processors and are connected to the one or more processors. The operations may include the operations described in FIG. 35.

Further, in a device including one or more memories and one or more processors operatively connected to the one or more memories, the one or more processors may control the device so that the device performs the operations described in FIG. 35.

Further, in one or more non-transitory computer readable mediums storing one or more instructions, the one or more instructions executable by one or more processors may allow a UE to perform the operations described in FIG. 35.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

## Examples of communication system applied to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 36 shows a communication system 1 based on an embodiment of the present disclosure. The embodiment of FIG. 36 may be combined with various embodiments of the present disclosure.

Referring to FIG. 36, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Examples of wireless device to which the present disclosure is applied**

FIG. 37 illustrates a communication system applied to the present disclosure.

Referring to FIG. 37, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 36.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) based on the descriptions, functions, procedures, proposals, methods, and/or operational flowcharts disclosed in this document. The one or more processors 102 and 202 may generate messages, control information, data, or information based on the descriptions, functions, procedures, proposals, methods, and/or operational flowcharts disclosed in this document. The one or more processors 102 and 202 may generate signals (e.g., baseband signals) including PDUs, SDUs, messages, control information, data, or information based on the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information based on the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Example of signal processing circuit to which the present disclosure is applied**

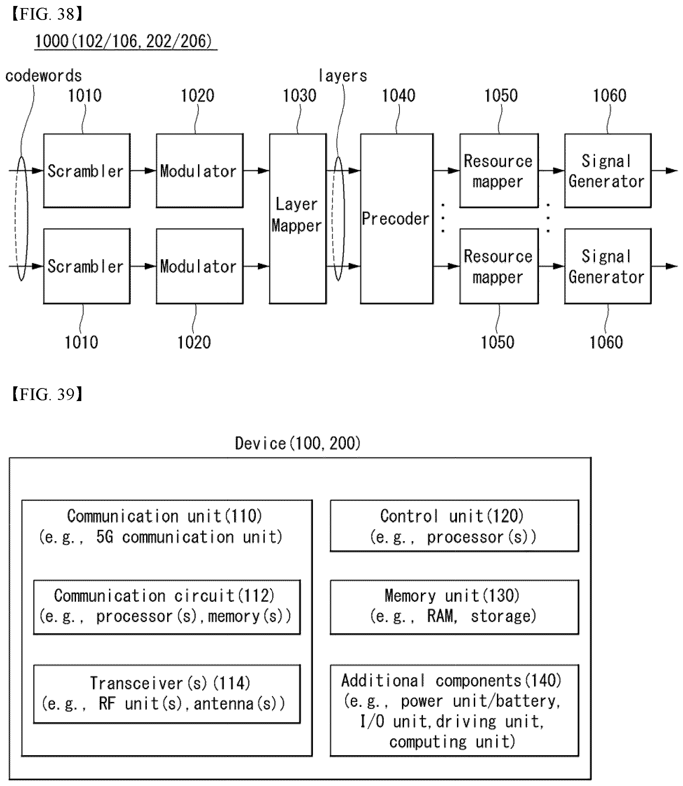

FIG. 38 shows a signal processing circuit for a transmission signal based on an embodiment of the present disclosure. The embodiment of FIG. 38 may be combined with various embodiments of the present disclosure.

Referring to FIG. 38, a signal processing circuit 1000 may include scramblers 1010, modulators 1020, a layer mapper 1030, a precoder 1040, resource mappers 1050, and signal generators 1060. An operation/function of FIG. 38 may be performed, without being limited to, the processors 102 and 202 and/or the transceivers 106 and 206 of FIG.

37. Hardware elements of FIG. 38 may be implemented by the processors 102 and 202 and/or the transceivers 106 and 206 of FIG. 37. For example, blocks 1010 to 1060 may be implemented by the processors 102 and 202 of FIG. 37. Alternatively, the blocks 1010 to 1050 may be implemented by the processors 102 and 202 of FIG. 37 and the block 1060 may be implemented by the transceivers 106 and 206 of FIG. 37.

Codewords may be converted into radio signals via the signal processing circuit 1000 of FIG. 38. Herein, the codewords are encoded bit sequences of information blocks. The information blocks may include transport blocks (e.g., a LTL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 38. For example, the wireless devices (e.g., 100 and 200 of FIG. 37) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

## Example of using a wireless device to which the present disclosure is applied

FIG. 39 shows another example of a wireless device based on an embodiment of the present disclosure. The wireless device may be implemented in various forms based on a use-case/service (refer to FIG. 36). The embodiment of FIG. 39 may be combined with various embodiments of the present disclosure.

Referring to FIG. 39, wireless devices 100 and 200 may correspond to the wireless devices 100 and 200 of FIG. 37 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 37. For example, the transceiver(s) 114 may include the one or more transceivers 106 and 206 and/or the one or more antennas 108 and 208 of FIG. 37. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured based on types of wireless devices. For example, the additional components 140 may include at least one of a power unit/battery, input/output (I/O) unit, a driving unit, and a computing unit. The wireless device may be implemented in the form of, without being limited to, the robot (100a of FIG. 36), the vehicles (100b-1 and 100b-2 of FIG. 36), the XR device (100c of FIG. 36), the hand-held device (100d of FIG. 36), the home appliance (100e of FIG. 36), the IoT device (100f of FIG. 36), a digital broadcast terminal, a hologram device, a public safety device, an MTC device, a medicine device, a fintech device (or a finance device), a security device, a climate/environment device, the AI server/device (400 of FIG. 36), the BSs (200 of FIG. 36), a network node, etc. The wireless device may be used in a mobile or fixed place based on a use-example/service.

In FIG. 39, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Example of hand-held device applicable for the present disclosure**

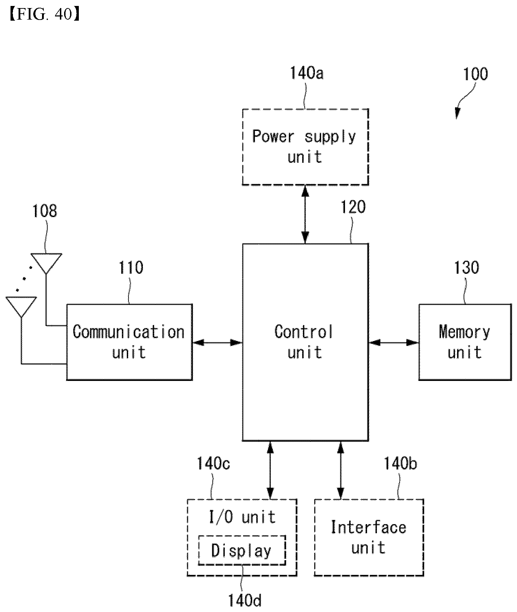

FIG. 40 shows a hand-held device based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 40 may be combined with various embodiments of the present disclosure.

Referring to FIG. 40, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 39, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

A wireless communication technology implemented by a wireless device (e.g., 100, 200) according to the present disclosure may include narrowband Internet of Things for low power communication in addition to LTE, NR and 6G. In this case, for example, the NB-IoT technology may be an example of a low power wide area network (LPWAN) technology and may be implemented by standards such as LTE Cat NB1 and/or LTE Cat NB2, and the present disclosure is not limited to the aforementioned names. Additionally or alternatively, the wireless communication technology implemented by the wireless device (e.g., 100, 200) according to the present disclosure may perform communication based on the LTE-M technology. In this case, for example, the LTE-M technology may be an example of the LPWAN technology and may be called various names, such as enhanced Machine Type Communication (eMTC). For example, the LTE-M technology may be implemented by at least one of various standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and the present disclosure is not limited to the aforementioned names. Additionally or alternatively, the wireless communication technology implemented by the wireless device (e.g., 100, 200) according to the present disclosure may include at least one of ZigBee, Bluetooth and a low power wide area network (LPWAN) in which low power communication is considered, and the present disclosure is not limited to the aforementioned names. For example, the ZigBee technology may generate personal area networks (PAN) related to small/low-power digital communication based on various standards such as IEEE 802.15.4, and may be called various names.

The embodiments described above are implemented by combinations of components and features of the present disclosure in predetermined forms. Each component or feature should be considered selectively unless specified separately. Each component or feature can be carried out without being combined with another component or feature. Moreover, some components and/or features are combined with each other and can implement embodiments of the present disclosure. The order of operations described in embodiments of the present disclosure can be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.

Embodiments of the present disclosure can be implemented by various means, for example, hardware, firmware, software, or combinations thereof. When embodiments are implemented by hardware, one embodiment of the present disclosure can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the present disclosure can be implemented by modules, procedures, functions, etc. performing functions or operations described above. Software code can be stored in a memory and can be driven by a processor. The memory is provided inside or outside the processor and can exchange data with the processor by various well-known means.

It is apparent to those skilled in the art that the present disclosure can be embodied in other specific forms without departing from essential features of the present disclosure. Accordingly, the above detailed description should not be construed as limiting in all aspects and should be considered as illustrative. The scope of the present disclosure should be determined by rational construing of the appended claims, and all modifications within an equivalent scope of the present disclosure are included in the scope of the present disclosure.

[Industrial Applicability]

A method of transmitting and receiving downlink data in a wireless communication system according to the present disclosure has been described focusing on examples applying to the 3GPP LTE/LTE-A system and 5G system (new RAT system), but the present disclosure can be applied to various wireless communication systems.

**Claims**

1. A method of performing, by a user equipment (LTE), a sidelink communication in a wireless communication system, the method comprising:

   receiving a sidelink-synchronization signal block (S-SSB) from other UE;
   performing a synchronization with the other UE based on the S-SSB; and
   receiving (i) a physical sidelink control channel (PSCCH) and (ii) a physical sidelink shared channel (PSSCH) based on a result of the synchronization,
   wherein the S-SSB includes information on a type of the other UE, and
   wherein the result of the synchronization is determined based on (i) the information on the type of the other UE and (ii) a type of the UE.

2. The method of claim 1, wherein the type is related to a sidelink reception capability of the UE.

3. The method of claim 2, wherein the type includes:

   (a) a first type supporting only a sidelink transmission operation;
   (b) a second type supporting only a physical sidelink feedback channel (PSFCH) reception operation and/or an S-SSB reception operation among (i) the sidelink transmission operation and (ii) a sidelink reception operation; and
   (c) a third type supporting both (i) the sidelink transmission operation and (ii) the sidelink reception operation.

4. The method of claim 3, wherein, based on a type of a UE transmitting the S-SSB being determined as the first type or the second type based on (i) the type of the UE being the first type or the second type and (ii) the information on the type of the other UE, the synchronization is not performed.

5. The method of claim 4, wherein, based on the synchronization being not performed, the PSCCH and the PSSCH are not received.

6. The method of claim 3, wherein the information on the type of the other UE is identified based on a transmission type of the S-SSB differently determined based on the type.

7. The method of claim 6, wherein the transmission type of the S-SSB is determined by differently applying a sequence related to the S-SSB to a transmission of the S-SSB based on the type.

8. The method of claim 7, wherein the sequence related to the S-SSB includes at least one of:

(i) a sequence related to a sidelink-primary synchronization signal (S-PSS) and/or a sidelink-secondary synchronization signal (S-SSS);
(ii) a physical sidelink broadcast channel (PSBCH) demodulation reference signal (DMRS) sequence;
(iii) a scrambling sequence of the PSBCH; or
(iv) a cyclic redundancy check (CRC) masking sequence of the PSBCH.

9. The method of claim 7, wherein, based on the type being (i) the first type or (ii) the second type, the transmission type of the S-SSB is a type in which an additional offset value is applied to a random seed upon generation of the sequence related to the S-SSB.

10. The method of claim 7, wherein, based on the type being (i) the first type or (ii) the second type, the transmission type of the S-SSB is a type in which an additional offset value is applied to a sequence value after generating the sequence related to the S-SSB.

11. The method of claim 3, wherein the information on the type of the other UE is identified based on a bit field value of a PSBCH differently configured based on the type.

12. The method of claim 11, wherein a bit field value of the PSBCH based on the first type and a bit field value of the PSBCH based on the second type are set to the same value, and
wherein a bit field of the PSBCH based on the third type is set to a different value from (i) the bit field value of the PSBCH based on the first type and (ii) the bit field value of the PSBCH based on the second type.

13. The method of claim 12, wherein a bit field of the PSBCH is a RESERVED bit field.

14. The method of claim 3, wherein, based on the type of the UE being the first type or the second type, the LTE identifies the other LTE, of which the type is the first type or the second type, as a UE with a lowest priority related to a synchronization source.

15. The method of claim 3, wherein, based on the type of the UE being the third type, the UE identifies the other UE, of which the type is the first type or the second type, as a UE with a highest priority related to a synchronization source.

16. A user equipment (UE) performing a sidelink communication in a wireless communication system, the LTE comprising:

one or more transceivers;
one or more processors; and
one or more memories connected to the one or more processors and configured to store instructions for operations executed by the one or more processors,
wherein the operations comprise:

receiving a sidelink-synchronization signal block (S-SSB) from other UE;
performing a synchronization with the other UE based on the S-SSB; and
receiving (i) a physical sidelink control channel (PSCCH) and (ii) a physical sidelink shared channel (PSSCH) based on a result of the synchronization,
wherein the S-SSB includes information on a type of the other UE, and

wherein the result of the synchronization is determined based on (i) the information on the type of the other UE and (ii) a type of the UE.

17. A method of performing, by a user equipment (LTE), a sidelink communication in a wireless communication system, the method comprising:

transmitting a sidelink-synchronization signal block (S-SSB) to other UE;
performing a synchronization with the other UE based on the S-SSB; and
transmitting (i) a physical sidelink control channel (PSCCH) and (ii) a physical sidelink shared channel (PSSCH) based on a result of the synchronization,
wherein the S-SSB includes information on a type of the other UE, and
wherein the result of the synchronization is determined based on (i) the information on the type of the other UE and (ii) a type of the UE.

18. A user equipment (UE) performing a sidelink communication in a wireless communication system, the LTE comprising:

one or more transceivers;
one or more processors; and
one or more memories connected to the one or more processors and configured to store instructions for operations executed by the one or more processors,
wherein the operations comprise:

transmitting a sidelink-synchronization signal block (S-SSB) to other UE;
performing a synchronization with the other UE based on the S-SSB; and
receiving (i) a physical sidelink control channel (PSCCH) and (ii) a physical sidelink shared channel (PSSCH) based on a result of the synchronization,
wherein the S-SSB includes information on a type of the other UE, and
wherein the result of the synchronization is determined based on (i) the information on the type of the other UE and (ii) a type of the UE.

19. A device comprising:

one or more memories; and
one or more processors operatively connected to the one or more memories,
wherein the one or more processors are configured to control the device to:

receive a sidelink-synchronization signal block (S-SSB) from other UE;
perform a synchronization with the other UE based on the S-SSB; and
receive (i) a physical sidelink control channel (PSCCH) and (ii) a physical sidelink shared channel (PSSCH) based on a result of the synchronization,
wherein the S-SSB includes information on a type of the other UE, and
wherein the result of the synchronization is determined based on (i) the information on the type of the other UE and (ii) a type of the UE.

20. One or more non-transitory computer readable mediums storing one or more instructions,
wherein the one or more instructions executable by one or more processors are configured to control a user equipment (LTE) to:

receive a sidelink-synchronization signal block (S-SSB) from other UE;
perform a synchronization with the other UE based on the S-SSB; and
receive (i) a physical sidelink control channel (PSCCH) and (ii) a physical sidelink shared channel (PSSCH) based on a result of the synchronization,
wherein the S-SSB includes information on a type of the other UE, and
wherein the result of the synchronization is determined based on (i) the information on the type of the other UE and (ii) a type of the UE.

【FIG. 1】

【FIG. 2】

```
┌ ─ ─ ─ ─ ─ ─ ─ ─ ─ ┐     ┌ ─ ─ ─ ─ ─ ─ ─ ─ ─ ┐
  UE                        eNB
  ┌─────────────┐           ┌─────────────┐
  │    PDCP     │◄────────►│    PDCP     │
  └─────────────┘           └─────────────┘
  ┌─────────────┐           ┌─────────────┐
  │    RLC      │◄────────►│    RLC      │
  └─────────────┘           └─────────────┘
  ┌─────────────┐           ┌─────────────┐
  │    MAC      │◄────────►│    MAC      │
  └─────────────┘           └─────────────┘
  ┌─────────────┐           ┌─────────────┐
  │    PHY      │◄────────►│    PHY      │
  └─────────────┘           └─────────────┘
└ ─ ─ ─ ─ ─ ─ ─ ─ ─ ┘     └ ─ ─ ─ ─ ─ ─ ─ ─ ─ ┘
```

【FIG. 3】

```
┌ ─ ─ ─ ─ ─ ─ ┐  ┌ ─ ─ ─ ─ ─ ─ ┐  ┌ ─ ─ ─ ─ ─ ─ ┐
  UE               eNB              MME
  ┌─────────┐                       ┌─────────┐
  │   NAS   │◄─────────────────────►│   NAS   │
  └─────────┘                       └─────────┘
  ┌─────────┐      ┌─────────┐
  │   RRC   │◄────►│   RRC   │
  └─────────┘      └─────────┘
  ┌─────────┐      ┌─────────┐
  │  PDCP   │◄────►│  PDCP   │
  └─────────┘      └─────────┘
  ┌─────────┐      ┌─────────┐
  │   RLC   │◄────►│   RLC   │
  └─────────┘      └─────────┘
  ┌─────────┐      ┌─────────┐
  │   MAC   │◄────►│   MAC   │
  └─────────┘      └─────────┘
  ┌─────────┐      ┌─────────┐
  │   PHY   │◄────►│   PHY   │
  └─────────┘      └─────────┘
└ ─ ─ ─ ─ ─ ─ ┘  └ ─ ─ ─ ─ ─ ─ ┘  └ ─ ─ ─ ─ ─ ─ ┘
```

【FIG. 4】

【FIG. 5】

| gNB |
| --- |
| INTER-CELLRRM |
| RB CONTROL |
| CONNECTION MOBILITY CONTROL |
| RADIO ACCESS CONTROL |
| MEASUREMENT CONFIGURATION AND PROVIDING |
| DYNAMIC RESOURCE ALLOCATION (SCHEDULER) |

NG-RAN

| AMF |
| --- |
| NAS SECURITY |
| IDLE STATE MOBILITY PROCESSING |

| SMF |
| --- |
| UE IP ADDRESS ALLOCATION |
| PDU SESSION CONTROL |

| UPF |
| --- |
| MOBILITY ANCHORING |
| PDU PROCESSING |

INTERNET

5GC

【FIG. 6】

· · · | One Frame (10ms) | · · ·

· · · | Half Frame (5ms) | Half Frame (5ms) | · · ·

· · · | subFrame 0 (1ms) | · · · | subFrame 4 (1ms) | subFrame 5 (1ms) | · · · | subFrame 9 (1ms) | · · ·

subframe (1ms)

15KHz | Slot 0 (14symbols)

1ms

30KHz | Slot 0 (14symbols) | Slot 1

500μs

60KHz | Slot 0 (14symbols) | Slot 1 | Slot 2 | Slot 3

250μs

120KHz | Slot 0 (14symbols) | Slot 1 | Slot 2 | Slot 3 | Slot 4 | Slot 5 | Slot 6 | Slot 7

125μs

【FIG. 7】

Resource grid

A carrier
(up to 3300 subcarriers, i.e., 275 RBs)

A BWP

1RB=12 subcarriers

1 RE

1 subcarrier

1 symbol

l=0 ···

k=0

【FIG. 8】

UE A
| PDCP |
| RLC |
| MAC |
| PHY |

UE B
| PDCP |
| RLC |
| MAC |
| PHY |

PU5-U

(a)

UE A
| RRC |
| RLC |
| MAC |
| PHY |

UE B
| RRC |
| RLC |
| MAC |
| PHY |

PU5-C

(b)

【FIG. 9】

UE A

| PDCP |
| RLC |
| MAC |
| PHY |

UE B

| PDCP |
| RLC |
| MAC |
| PHY |

PU5-U

(a)

UE A

| RRC |
| RLC |
| MAC |
| PHY |

UE B

| RRC |
| RLC |
| MAC |
| PHY |

PU5-C

(b)

【FIG. 10】

S-SSB

| PSBCH | S-PSS | S-PSS | S-SSS | S-SSS | PSBCH | PSBCH | PSBCH | PSBCH | PSBCH | PSBCH | PSBCH | PSBCH | GAP |

1 symbol

【FIG. 11】

S-SSB

| PSBCH | S-PSS | S-PSS | S-SSS | S-SSS | PSBCH | PSBCH | PSBCH | PSBCH | PSBCH | PSBCH | GAP |

1 symbol

【FIG. 12】

BS(e.g. eNB or gNB)

UE 1                    UE 2

【FIG. 13】

Frequency

| Unit #$(N_F-1)$ | Unit #$(2N_F-1)$ | | Unit #$(N_F*N_T-1)$ | Unit #$(N_F-1)$ |
|---|---|---|---|---|
| : | : | | : | : |
| Unit #1 | Unit #$(N_F+1)$ | ... | Unit #$(N_F*N_T-N_F+1)$ | Unit #1 |
| Unit #0 | Unit #$N_F$ | | Unit #$(N_F*N_T-N_F)$ | Unit #0 |

Time

D2D signal transmission
from a UE allocated
with unit#0

D2D signal transmission
from a UE allocated
with unit#0

【FIG. 14】

| BS | UE 1 | UE 2 |
|---|---|---|

PDCCH →

PSCCH →

PSSCH →

| UE 1 | UE 2 |
|---|---|

PSCCH →

PSSCH →

(a)                                    (b)

【FIG. 15】

● : TRANSMITTING UE

▨ : RECEIVING UE

(a)

(b)

(c)

【FIG. 16】

UE (100)

| LTE MODULE | ← → | NR MODULE |

【FIG. 17】

Control Plane

RRC

PDCP

Radio Bearer
(Physical Channels)

RLC

Logical Channels

MAC

Transport Channels

Physical Layer

Transport Channel Processing

Physical Channels

Physical Channel Processing

Physical Signsl

Analog Processing

【FIG. 18】

UE1

UE2

Capability Information

【FIG. 19】

```
┌──────┐                                    ┌──────┐
│  UE1 │                                    │  UE2 │
└──────┘                                    └──────┘
   │                                            │
   │            Capability Enquiry              │
   │ ─────────────────────────────────────────>│
   │                                            │
   │          Capability Information            │
   │ <─────────────────────────────────────────│
   │                                            │
   │                                            │
```

【FIG. 20】

```
┌──────┐                                    ┌──────┐
│  UE1 │                                    │  UE2 │
└──────┘                                    └──────┘
   │                                            │
   │           Configuration Message            │
   │ ─────────────────────────────────────────>│
   │                                            │
   │           Configuration Complete           │
   │ <─────────────────────────────────────────│
   │                                            │
   │                                            │
```

【FIG. 21】

Transport block(MAC PDU)

↓

| Encoding | ～S100 |

Codeword ↓

| Scrambling | ～S101 |

↓

| Modulation | ～S102 |

↓

| Layer mapping | ～S103 |

↓

| Transform Precoding (DFT) | ～S104 |

↓

| Subcarrier mapping | ～S105 |

↓

| OFDM modulation (IFFT + CP insertion) | ～S106 |

OFDM baseband signals ↓

| Up-conversion (RF) | ～S107 |

↓

RF signals

【FIG. 22】

Transport block(MAC PDU)
↑

```
┌─────────────────────────────┐
│          Decoding           │───S117
└─────────────────────────────┘
        Codeword ↑
┌─────────────────────────────┐
│        Descrambling         │───S116
└─────────────────────────────┘
              ↑
┌─────────────────────────────┐
│        Demodulation         │───S115
└─────────────────────────────┘
              ↑
┌─────────────────────────────┐
│       Layer demapping       │───S114
└─────────────────────────────┘
              ↑
┌ ─ ─ ─ ─ ─ ─ ─ ─ ─ ─ ─ ─ ─ ─ ┐
    Transform Deprecoding       ───S113
│          (IDFT)             │
└ ─ ─ ─ ─ ─ ─ ─ ─ ─ ─ ─ ─ ─ ─ ┘
              ↑
┌─────────────────────────────┐
│     Subcarrier Demapping    │───S112
└─────────────────────────────┘
              ↑
┌─────────────────────────────┐
│      OFDM demodulation      │───S111
│     (CP detach + FFT)       │
└─────────────────────────────┘
```
OFDM baseband signals ↑
```
┌─────────────────────────────┐
│       Down-conversion       │───S110
│            (RF)             │
└─────────────────────────────┘
```
↑
RF signals

【FIG. 23】

【FIG. 24】

【FIG. 25】

| | | | | | |
|---|---|---|---|---|---|
| LPP | | | | | LPP |
| NAS | | Relay | NAS | | HTTP/2 |
| RRC | RRC | NGAP | NGAP | HTTP/2 | |
| PDCP | PDCP | SCTP | SCTP | TLS | TLS |
| | | | | TCP | TCP |
| RLC | RLC | IP | IP | IP | IP |
| MAC | MAC | L2 | L2 | L2 | L2 |
| L1 | L1 | L1 | L1 | L1 | L1 |
| UE | NR-Uu LTE-Uu | NG RAN | NG-C | AMF | NLs LMF |

【FIG. 26】

| | | | | |
|---|---|---|---|---|
| NRPPa | | | | NRPPa |
| NGAP | NGAP | HTTP/2 | | HTTP/2 |
| SCTP | SCTP | TLS | | TLS |
| | | TCP | | TCP |
| IP | IP | IP | | IP |
| L2 | L2 | L2 | | L2 |
| L1 | L1 | L1 | | L1 |
| NG RAN | NG-C | AMF | NLs | LMF |

【FIG. 27】

【FIG. 28】

【FIG. 29】

【FIG. 30】

$N_{BWP,2}^{size}$

$N_{BWP,1}^{size}$

$N_{BWP,0}^{size}$

$N_{BWP,2}^{start}$

$N_{BWP,1}^{start}$

$N_{BWP,0}^{start}$

Carrier Bandwidth

PRB N3

PRB 1

PRB 0

PRB N2

PRB 1

PRB 0

PRB N1

PRB 1

PRB 0

CRB 0

Frequency

Time

IN REFERENCE RESOURCE BLOCK
PRB 0(Point A)

【FIG. 31】

【FIG. 32】

【FIG. 33】

Transport Block
from MAC layer

```
┌──────────────┐    ┌──────────────────┐    ┌──────────────┐    ┌──────────────────┐
│  Transport   │    │   Code block     │    │              │    │ Physical-layer   │
│  Block CRC   │───▶│ segmentation and │───▶│   Channel    │───▶│   hybrid-ARQ     │
│  attachment  │    │   Code Block     │    │   coding     │    │   processing     │
│              │    │  CRC attachment  │    │              │    │                  │
└──────────────┘    └──────────────────┘    └──────────────┘    └──────────────────┘
```

```
┌────────────────────────────────────────┐    ┌──────────────┐    ┌──────────────────┐
│        Modulation: π/2 BPSK            │    │              │    │                  │
│   (with transform precoding only),     │◀───│  Scrambling  │◀───│      Rate        │
│   QPSK, 16QAM, 64QAM and 256QAM        │    │              │    │    matching      │
└────────────────────────────────────────┘    └──────────────┘    └──────────────────┘
```

```
┌────────────────────────────────────────┐    ┌──────────────────────────────┐
│  Layer mapping, transform precoding    │    │                              │
│ (enabled/disabled by configuration),   │───▶│  Mapping to assigned resources│
│         and pre-coding                 │    │      and antenna ports       │
└────────────────────────────────────────┘    └──────────────────────────────┘
```

【FIG. 34】

```
                    ( Start )
                        |
                        v
+-----------------------------------------------+
| Receive sidelink-synchronization signal block |  ~S3410
|           (S-SSB) from other UE               |
+-----------------------------------------------+
                        |
                        v
+-----------------------------------------------+
| Perform synchronization with other UE based   |  ~S3420
|                   on S-SSB                     |
+-----------------------------------------------+
                        |
                        v
+-----------------------------------------------+
| Receive (i) physical sidelink control channel |
|    (PSCCH) and (ii) physical sidelink shared   |  ~S3430
|    channel (PSSCH) based on result of          |
|              synchronization                   |
+-----------------------------------------------+
                        |
                        v
                    ( End )
```

【FIG. 35】

```
                    ( Start )
                        |
                        v
+-----------------------------------------------+
| Transmit sidelink-synchronization signal block|  ~S3510
|           (S-SSB) to other UE                 |
+-----------------------------------------------+
                        |
                        v
+-----------------------------------------------+
| Perform synchronization with other UE based   |  ~S3520
|                   on S-SSB                     |
+-----------------------------------------------+
                        |
                        v
+-----------------------------------------------+
| Transmit (i) physical sidelink control channel|
|    (PSCCH) and (ii) physical sidelink shared   |  ~S3530
|    channel (PSSCH) based on result of          |
|              synchronization                   |
+-----------------------------------------------+
                        |
                        v
                    ( End )
```

【FIG. 36】

【FIG. 37】

【FIG. 38】

1000 (102/106, 202/206)

codewords

layers

| | 1010 | | 1020 | | 1030 | | 1040 | | 1050 | | 1060 |

Scrambler → Modulator → Layer Mapper → Precoder → Resource mapper → Signal Generator →

Scrambler → Modulator → Resource mapper → Signal Generator →

1010    1020                          1050    1060

【FIG. 39】

Device (100, 200)

Communication unit (110)
(e.g., 5G communication unit)

Control unit (120)
(e.g., processor(s))

Communication circuit (112)
(e.g., processor(s),memory(s))

Memory unit (130)
(e.g., RAM, storage)

Transceiver(s) (114)
(e.g., RF unit(s),antenna(s))

Additional components (140)
(e.g., power unit/battery,
I/O unit,driving unit,
computing unit)

【FIG. 40】

**INTERNATIONAL SEARCH REPORT**

| International application No. |
| --- |
| **PCT/KR2022/003014** |

| | |
| --- | --- |
| **A. CLASSIFICATION OF SUBJECT MATTER** | |

**H04W 56/00**(2009.01)i; **H04W 4/40**(2018.01)i; **H04J 11/00**(2006.01)i; **H04W 48/10**(2009.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 56/00(2009.01); H04J 13/00(2011.01); H04L 7/00(2006.01); H04W 74/08(2009.01); H04W 92/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), S-SSB(Sidelink-Synchronization Signal Block), 타입(type), 능력(capability), 시퀀스(sequence), 비트 필드(bit field), 우선순위(priority)

**C. DOCUMENTS CONSIDERED TO BE RELEVANT**

| Category* | Citation of document, with indication, where appropriate, of the relevant passages | Relevant to claim No. |
| --- | --- | --- |
| Y<br><br>A | KR 10-2020-0120534 A (IUCF-HYU (INDUSTRY-UNIVERSITY COOPERATION FOUNDATION HANYANG UNIVERSITY)) 21 October 2020 (2020-10-21)<br>See paragraphs [0009], [0080] and [0179]; and claim 1. | 1-5,11-20<br><br>6-10 |
| Y | US 2010-0172454 A1 (DENTENEER, Theodorus J.J.) 08 July 2010 (2010-07-08)<br>See paragraphs [0029], [0034]-[0037] and [0049]; and claims 1 and 8. | 1-5,11-20 |
| Y | VIVO. Resource allocation for sidelink power saving. R1-2100466, 3GPP TSG RAN WG1 #104-e, e-Meeting. 19 January 2021.<br>See section 2.1. | 3-5,11-15 |
| A | KR 10-2021-0003297 A (SAMSUNG ELECTRONICS CO., LTD.) 11 January 2021 (2021-01-11)<br>See claims 1-6. | 1-20 |
| A | KR 10-2020-0049889 A (SAMSUNG ELECTRONICS CO., LTD.) 08 May 2020 (2020-05-08)<br>See paragraphs [0099]-[0110]. | 1-20 |

☐ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **03 June 2022** | **03 June 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

| | International application No. |
|---|---|
| | **PCT/KR2022/003014** |

| Patent document cited in search report | | | Publication date (day/month/year) | Patent family member(s) | | | Publication date (day/month/year) |
|---|---|---|---|---|---|---|---|
| KR | 10-2020-0120534 | A | 21 October 2020 | KR | 10-2020-0120533 | A | 21 October 2020 |
| | | | | KR | 10-2020-0120535 | A | 21 October 2020 |
| | | | | KR | 10-2021-0002002 | A | 06 January 2021 |
| | | | | US | 2021-0203453 | A1 | 01 July 2021 |
| | | | | US | 2021-0234663 | A1 | 29 July 2021 |
| | | | | US | 2021-0235420 | A1 | 29 July 2021 |
| | | | | US | 2021-0242975 | A1 | 05 August 2021 |
| | | | | WO | 2020-209656 | A1 | 15 October 2020 |
| | | | | WO | 2020-209657 | A1 | 15 October 2020 |
| | | | | WO | 2020-209658 | A1 | 15 October 2020 |
| | | | | WO | 2020-263019 | A1 | 30 December 2020 |
| US | 2010-0172454 | A1 | 08 July 2010 | CN | 101682550 | A | 24 March 2010 |
| | | | | CN | 101682550 | B | 20 November 2013 |
| | | | | EP | 2158730 | A1 | 03 March 2010 |
| | | | | EP | 2158730 | B1 | 10 August 2016 |
| | | | | ES | 2601581 | T3 | 15 February 2017 |
| | | | | JP | 2010-530168 | A | 02 September 2010 |
| | | | | JP | 5421906 | B2 | 19 February 2014 |
| | | | | TW | 200922205 | A | 16 May 2009 |
| | | | | TW | I459755 | B | 01 November 2014 |
| | | | | US | 8666008 | B2 | 04 March 2014 |
| | | | | WO | 2008-152567 | A1 | 18 December 2008 |
| KR | 10-2021-0003297 | A | 11 January 2021 | CN | 112385278 | A | 19 February 2021 |
| | | | | EP | 3799698 | A1 | 07 April 2021 |
| | | | | JP | 2021-529496 | A | 28 October 2021 |
| | | | | US | 10834708 | B2 | 10 November 2020 |
| | | | | US | 2020-0015214 | A1 | 09 January 2020 |
| | | | | US | 2021-0051641 | A1 | 18 February 2021 |
| | | | | WO | 2020-009553 | A1 | 09 January 2020 |
| KR | 10-2020-0049889 | A | 08 May 2020 | CN | 109586879 | A | 05 April 2019 |
| | | | | EP | 3689053 | A1 | 05 August 2020 |
| | | | | US | 11206628 | B2 | 21 December 2021 |
| | | | | US | 2020-0322910 | A1 | 08 October 2020 |
| | | | | WO | 2019-066475 | A1 | 04 April 2019 |

Form PCT/ISA/210 (patent family annex) (July 2019)